# EUROPÄISCHE PATENTSCHRIFT

(11) **EP 3 915 909 B1**
(45) Veröffentlichungstag und Bekanntmachung des Hinweises auf die Patenterteilung: **23.11.2022**
(21) Anmeldenummer: 21173668.1
(22) Anmeldetag: 12.05.2021
(51) Int. Cl.: B65G 69/28, B66F 17/00

(54) **VERFAHREN ZUM SICHERN EINES LOGISTIKBEREICHS**
METHOD FOR SECURING A LOGISTICS AREA
PROCÉDÉ DE SÉCURISATION D'UNE ZONE LOGISTIQUE

(30) Priorität: 13.05.2020 DE 102020113010
(43) Veröffentlichungstag der Anmeldung: 01.12.2021
(73) Patentinhaber: comnovo GmbH, 44227 Dortmund (DE)
(72) Erfinder: Lewandowski, Andreas, 44227 Dortmund (DE); Winkler, Ron, 44227 Dortmund (DE); Mühlbeier, Arthur, 44227 Dortmund (DE); Gerstel, Dominik, 44227 Dortmund (DE)
(74) Vertreter: Eisenführ Speiser

(56) Entgegenhaltungen:
- EP-A1- 3 546 419
- DE-U1-202018 105 041
- US-A1- 2020 039 353

## Beschreibung

Die Erfindung betrifft ein Verfahren zum Sichern eines Logistikbereichs, insbesondere einer Ladezone, aufweisend die Schritte: Überwachen einer Kontrollzone, die ein Teilbereich eines ersten dreidimensionalen elektromagnetischen Feldes ist, das von einer Kontroll-Antenneneinheit bereitgestellt wird und Ermitteln, ob sich ein erstes Fahrzeugmodul in der Kontrollzone befindet, wobei das Fahrzeugmodul auf einem ersten Fahrzeug, insbesondere Flurförderfahrzeug und/oder autonom fahrendes Fahrzeug, montiert und auf die Kontroll-Antenneneinheit abgestimmt ist.

Aufgrund begrenzter Lagerhaltungskapazitäten, eng getakteter Prozessabläufe und der weit verbreiteten Just-In-Time-Strategie ist es in Logistikbereichen vielfach notwendig, Warentransporte und das Umschlagen von Waren in Logistikbereichen besonders effizient zu gestalten. Hieraus resultiert ein hoher Zeitdruck auf Fahrer von Fahrzeugen, insbesondere von Flurförderfahrzeugen, wie beispielsweise Gabelstaplern. Ankommende und ausgehende Warenlieferungen müssen möglichst schnell in die dafür vorgesehenen Transportfahrzeuge geladen oder aus den anliefernden Transportfahrzeugen entladen werden. Bei modernen Logistikbereichen liegt eine Ladezone zum Be- und Entladen von Transportfahrzeugen meist in etwa auf einer gleichen Höhe wie eine Ladefläche eines Transportfahrzeugs, wodurch ein möglichst schnelles Be- und Entladen ermöglicht wird. Um einen zwischen der Ladezone und der Ladefläche des Transportfahrzeugs liegenden Spalt zu überbrücken, sind meist Laderampen vorgesehen. Diese Laderampen können manuell auf die Laderampe aufgelegt werden oder elektrisch, pneumatisch sowie hydraulisch angetrieben sein. Zwar sind moderne Laderampen oftmals mit Lippen ausgestattet, die einen möglichst kontinuierlichen Übergang zwischen der Laderampe und der Ladefläche bereitstellen sollen, dennoch muss beim Be- und Entladen des Fahrzeugs von einem Flurförderfahrzeug meist eine Kante der Laderampe überfahren werden.

Werden diese Kanten zu schnell Überfahren, kann eine Vielzahl von Problemen verursacht werden. So unterliegen die Reifen eines Flurförderfahrzeugs erhöhtem Verschleiß, wenn die Kante zwischen Laderampe und Ladefläche zu schnell überfahren wird. Dieser Verschleiß bedingt Ausfälle von Flurförderfahrzeugen und erhöhte Wartungskosten. Zudem entsteht Lärm, der insbesondere in dicht besiedelten Gebieten zu einer mangelnden Akzeptanz gegenüber dem Logistikbereich sowie zur gesundheitlichen Belastung des Personals führen kann. Weiterhin kann das Überfahren der Kante Erschütterungen verursachen, die zum Herabstürzen von Transportgut und/oder zur Beschädigung von empfindlichem Transportgut führen können. Zudem kann durch die Kante ein Stoß auf das Fahrzeug ausgelöst werden, der sich in eine Humanschwingung übersetzt, die bei langfristiger und regelmäßiger Exposition zu gesundheitlichen Schäden eines Flurförderzeug-Fahrers führen kann.

Ein weiteres Problem im Logistikbereich sind Beschädigungen an Infrastruktur, Transportfahrzeugen und Flurförderfahrzeugen, die von einer zu hohen Hubeinheit des Flurförderfahrzeugs verursacht werden. Wird beispielsweise ein Hubmast eines Gabelstaplers, der zum Anheben von Transportgut vorgesehen ist, zu weit angehoben, während sich der Gabelstapler auf einer Ladefläche eines Transportfahrzeugs befindet, kann eine Abdeckung der Ladefläche des Transportfahrzeugs beschädigt werden.

Des Weiteren kommt es in Logistikbereichen vielfach zu Kollisionen zwischen mehreren Fahrzeugen, wodurch Sachschäden und auch Personenschäden bedingt werden können. Befindet sich ein Gabelstapler auf der Ladefläche eines Transportfahrzeugs oder in einem Gangbereich, ist dieser von einem Bereich vor der Laderampe nur schwer oder nicht zu erkennen. Fährt nun ein zweites Flurförderfahrzeug an der Laderampe vorbei, während zeitgleich der Gabelstapler über die Laderampe in die Ladezone einfährt kann es zu einer Kollision kommen. Eine ähnliche Problematik ergibt sich auch bei Gängen auf Lagerflächen, wenn ein erstes Flurförderfahrzeug einen Gang, wie beispielsweise einen von zwei Regalen gebildeten Zwischengang, verlässt und zeitgleich ein zweites Flurförderfahrzeug einen Ausfahrtsbereich dieses Gangs durchfährt.

Aus dem Stand der Technik sind verschiedene Verfahren und Systeme zum Sichern von Fahrzeugen bekannt. So offenbart DE 20 2018 105 041 U1 der hiesigen Anmelderin ein Torsicherheitssystem zum Verhindern von Kollisionen zwischen einem Fahrzeug und einem Tor. Ein an dem Tor angeordnetes Tormodul definiert eine Tor-Warnzone und ermittelt, ob sich ein darauf abgestimmtes Fahrzeugmodul innerhalb der Tor-Warnzone befindet. Eine Tor-Verarbeitungseinheit ist ferner dazu eingerichtet, ein Bremssignal an das Fahrzeugmodul zu senden, um ein Fahrzeug zu bremsen, an dem das Fahrzeugmodul montiert ist. Hierbei ist jedoch ein permanentes Überwachen der Fahrzeuge notwendig. DE 20 2018 105 041 U1 offenbart ein Verfahren nach dem Oberbegriff des Anspruchs 1 und ein System nach dem Oberbegriff des Anspruchs 8.

Ferner ist auch aus der WO 2018/015315 A1 der hiesigen Anmelderin ein Verfahren zur Warnung von Personen im Verkehr bekannt, wobei eine Warnzone überwacht und bestimmt wird, ob sich ein Warnmodul innerhalb der Warnzone befindet. In Antwort auf das Bestimmen des Warnmoduls innerhalb der Warnzone kann ein Warnsignal ausgegeben werden. Diese Offenbarung beruht auf dem Problem, dass häufige Fehlwarnungen das Bedienpersonal desensibilisieren und eine Sicherungswirkung reduzieren können, was durch eine spezielle Formgebung der Warnzonen vermieden werden soll. Spezielle Anforderungen von Ladezonen werden nicht berücksichtigt.

Die Aufgabe der vorliegenden Erfindung besteht also darin, ein Verfahren bereitzustellen, das zum Sichern eines Logistikbereichs geeignet ist und eine gegenüber dem Stand der Technik verbesserte Sicherheit bietet.

Die Erfindung löst diese Aufgabe durch den Verfahren nach Anspruch 1.

Der Sicherheits-Statusindikator wird also erfindungsgemäß im Betrieb solange beibehalten, bis das erste Fahrzeugmodul bzw. das erste Fahrzeug in die Freigabezone eintritt oder sich darin befindet. Sobald das erste Fahrzeugmodul in der Kontrollzone registriert wurde, ist daher kein weiteres Überwachen dieses ersten Fahrzeugmoduls mehr nötig, wodurch eine möglichst einfache Verfahrensdurchführung erreicht wird. Ferner ist eine Ausfallsicherheit erhöht, da der Sicherheits-Statusindikator auch dann gesetzt ist, wenn ein Kontrollmodul, welches vorzugsweise die Kontrollzone definiert, nach dem Setzen des Sicherheits-Statusindikators einen Fehler aufweisen sollte. Beispielsweise kann der Sicherheits-Statusindikator auch dann gesetzt sein, wenn das Kontrollmodul ausfällt und keine Kontrollzone mehr definiert. Vorzugsweise weist das Verfahren ferner auf: Setzen eines Fahrzeug-Sicherheits-Statusindikators in einer ersten Fahrzeugsteuereinheit des ersten Fahrzeugs, in Antwort auf das Ermitteln des ersten Fahrzeugmoduls in der Kontrollzone und/oder in Antwort auf das Setzen des Sicherheits-Statusindikators in der ersten Fahrzeug-Verarbeitungseinheit, und Beibehalten des Fahrzeug-Sicherheits-Statusindikators in der ersten Fahrzeugsteuereinheit des ersten Fahrzeugs, auch dann, wenn das erste Fahrzeugmodul die Kontrollzone verlässt und/oderwenn das erste Fahrzeugmodul einen Fehler aufweist. Durch ein ergänzendes Setzen eines Fahrzeug-Sicherheits-Statusindikators kann eine Ausfallsicherheit weiter erhöht werden. So wird der Fahrzeug-Sicherheits-Statusindikator auch dann beibehalten, wenn das erste Fahrzeugmodul beschädigt wird und/oder einen Fehler aufweist.

Durch die Schritte des Verfahrens kann ferner in vorteilhafter Weise erreicht werden, dass nur ein Eintreten des ersten Fahrzeugs erfasst werden muss und kein dauerhaftes Überwachen eines sich in der Kontrollzone befindenden Fahrzeugs notwendig ist. Der Erfindung liegt dabei die Erkenntnis zugrunde, dass die zu sichernden Logistikbereiche oftmals nur einen einzigen Zugang aufweisen und daher auch nur dieser Zugang überwacht werden muss, um Kollisionen zu vermeiden. Weiterhin kann eine räumliche Erstreckung der Kontrollzone eingeschränkt werden, ohne die Funktionalität des Verfahrens zu vermindern. Wird die Kontrollzone beispielsweise so gewählt, dass diese eine Laderampe abdeckt, wird der Sicherheits-Statusindikator gesetzt und auch beibehalten, wenn sich das erste Fahrzeug auf einer Ladefläche eines Transportfahrzeugs befindet. Dabei muss nicht die gesamte Ladefläche des Fahrzeugs von der Kontrollzone abgedeckt sein, wodurch eine Verarbeitungseffizienz eines das Verfahren durchführenden Systems gesteigert werden kann. Das Löschen des Sicherheits-Statusindikators erfolgt, wenn das Fahrzeug in eine Freigabezone eintritt. Vorzugsweise ist die Freigabezone benachbart zur Kontrollzone angeordnet. Ferner bevorzugt können die Freigabezone und die Kontrollzone auch überlappend ausgebildet sein. Vorzugsweise erfolgt das Löschen des Sicherheits-Statusindikators nur dann, wenn ermittelt wird, dass sich das erste Fahrzeugmodul ausschließlich in der der Freigabezone befindet. Es kann jedoch auch vorgesehen sein, dass die Kontrollzone und die Freigabezone zueinander beabstandet ausgebildet sind. Beispielsweise kann die Freigabezone in einem Torbereich angeordnet sein, der einen Übergang zwischen einem Entladebereich mit Laderampen und einem Hauptlagerbereich eines Lagerhauses bildet. Vorzugsweise weist der Schritt Ermitteln, ob sich das erste Fahrzeugmodul in der Kontrollzone befindet auf: Ermitteln durch die Kontroll-Verarbeitungseinheit, dass sich das erste Fahrzeugmodul in der Kontrollzone befindet; Senden einer Konfiguration der Kontrollzone an das erste Fahrzeugmodul und Ermitteln durch das erste Fahrzeugmodul, ob sich das erste Fahrzeugmodul in der Kontrollzone befindet unter Verwendung der empfangenen Konfiguration der Kontrollzone. Die Konfiguration der Kontrollzone umfasst dabei zumindest eine räumliche Gestalt der Kontrollzone, insbesondere eine Projektion der Kontrollzone auf eine von Fahrzeugen befahrene Fläche.

Der Sicherheits-Statusindikator kennzeichnet vorzugsweise einen bestimmten Zustand der ersten Fahrzeug-Verarbeitungseinheit und/oder eines auf der Fahrzeug-Verarbeitungseinheit ausgeführten Computerprogramms. Der Sicherheits-Statusindikator ist besonders bevorzugt ein digitaler Statusindikator, der auch als Flag bezeichnet werden kann. Vorzugsweise bestimmt der Sicherheits-Statusindikator einen Betriebszustand der Fahrzeug-Verarbeitungseinheit. Das Überwachen einer Kontrollzone umfasst vorzugsweise die Schritte Erzeugen eines ersten dreidimensionalen elektromagnetischen Feldes mittels einer Kontroll-Antenneneinheit, Definieren der Kontrollzone, die ein Teilbereich des ersten dreidimensionalen elektromagnetischen Feldes ist, mittels einer Kontroll-Verarbeitungseinheit, und Überwachen der Kontrollzone durch die Kontroll-Verarbeitungseinheit.

In einer ersten bevorzugten Ausführungsform des Verfahrens zusätzlich zum Löschen des ersten Sicherheits-Statusindikators ausgeführt: Ersetzen des Sicherheits-Statusindikators durch einen zweiten Statusindikator in der ersten Fahrzeug-Verarbeitungseinheit des ersten Fahrzeugmoduls, wenn ermittelt wird, dass sich das erste Fahrzeugmodul in der Freigabezone befindet. Vorzugsweise bestimmt der zweite Statusindikator einen zweiten Betriebszustand der Fahrzeug-Verarbeitungseinheit, der besonders bevorzugt einem regulären Betriebszustand entspricht. Es kann jedoch auch vorgesehen sein, dass der zweite Fahrzeugindikator zum Identifizieren des ersten Fahrzeugs verwendet wird. Somit kann mittels des zweiten Fahrzeugindikators beispielsweise eine Warenverfolgung erleichtert werden.

Gemäß einer bevorzugten Weiterbildung weist das Verfahren ferner auf: Beschränken zumindest eines Bewegungsfreiheitsgrades des ersten Fahrzeugs, wenn der Sicherheits-Statusindikator in der ersten Fahrzeug-Verarbeitungseinheit gesetzt ist. Vorzugsweise ist das erste Fahrzeugmodul mit einer Steuerung des ersten Fahrzeugs verbunden, wobei das Verfahren die Schritte aufweist, Bereitstellen eines Beschränkungssignals an der Steuerung des ersten Fahrzeugs mittels des ersten Fahrzeugmoduls. Es soll verstanden werden, dass auch mehr als ein Bewegungsfreiheitsgrades des ersten Fahrzeugs beschränkt werden können, wenn der Sicherheits-Statusindikator gesetzt ist.

Vorzugsweise weist das Verfahren ferner auf: Freigeben des zumindest einen Bewegungsfreiheitsgrades des ersten Fahrzeugs, wenn der Sicherheits-Statusindikator aus der ersten Fahrzeug-Verarbeitungseinheit gelöscht wird. Weiterhin bevorzugt weist das Verfahren ferner auf: Freigeben des zumindest einen Bewegungsfreiheitsgrades des ersten Fahrzeugs, wenn der zweite Statusindikator in der ersten Fahrzeug-Verarbeitungseinheit gesetzt ist. Es kann jedoch auch vorgesehen sein, dass ein anderer Bewegungsfreiheitsgrad beschränkt wird oder der zumindest eine Bewegungsfreiheitsgrad des ersten Fahrzeugs in einer anderen Art und Weise beschränkt wird, wenn der zweite Statusindikator gesetzt ist. Beispielsweise kann ein Beschränken eines ersten Bewegungsfreiheitsgrads des Fahrzeugs aufgehoben werden und ein Beschränken eines zweiten Bewegungsfreiheitsgrades weniger intensiv, beispielsweise nur zu 50% der maximalen Beschränkung, oder weniger, beibehalten werden. So kann beispielsweise, wenn der zweite Statusindikator an Stelle des ersten Statusindikators gesetzt ist, eine erreichbare Maximalgeschwindigkeit des Fahrzeugs erhöht und ein maximaler Lenkwinkel des Fahrzeugs freigegeben bzw. dessen Beschränkung aufgehoben werden.

Vorzugsweise ist der Bewegungsfreiheitsgrad ausgewählt aus einem der folgenden Parameter: Fahrtgeschwindigkeit des Fahrzeugs, Kurvenradius, Hubhöhe einer Hubeinheit des Fahrzeugs, Beschleunigung des Fahrzeugs, mögliche Fahrtrichtung des ersten Fahrzeugs, insbesondere Vorwärtsfahrt und/oder Rückwärtsfahrt des ersten Fahrzeugs, erreichbare maximale Fahrtgeschwindigkeit bei der Vorwärtsfahrt des ersten Fahrzeugs, erreichbare maximale Fahrtgeschwindigkeit bei der Rückwärtsfahrt des ersten Fahrzeugs, freigegebener Bewegungsbereich des Fahrzeugs. So kann es zum Vermeiden von Beschädigungen der Räder des ersten Fahrzeugs wünschenswert sein, dass eine maximale Fahrgeschwindigkeit des Fahrzeugs begrenzt ist, wenn das Fahrzeug sich im Bereich einer Laderampe befindet. Ferner sinkt das Risiko, dass ein anderes Fahrzeug übersehen wird und/oder dass das erste Fahrzeug vom Fahrer eines anderen Fahrzeugs übersehen wird, mit sinkender Geschwindigkeit. Weiterhin kann auch eine Beschränkung des minimalen Kurvenradius und/oder maximalen Kurvenradius des Fahrzeugs Schäden vermeiden, die durch plötzliche starke Lenkbewegungen verursacht werden. Ein Beschränken einer maximalen Beschleunigung des Fahrzeugs verhindert ein Herabstürzen von Ladung. Ferner kann eine Hubhöhe einer Hubeinheit des Fahrzeugs beschränkt sein. So kann beispielsweise ein Hubmast eines Gabelstaplers eine maximale Höhe nicht überschreiten, wodurch Beschädigungen an Abdeckungen von Ladeflächen von Transportfahrzeugen oder Transporteinheiten wie zum Beispiel Containern oder Kollisionen mit Ladetoren vermieden werden. Ferner kann auch ein freigegebener Bewegungsbereich des Fahrzeugs definiert werden. Beispielsweise kann ein Zugang des Fahrzeugs zu einem vorbestimmten Teilbereich des Logistikbereichs beschränkt und/oder unterbunden werden, wenn der erste Sicherheits-Statusindikator gesetzt ist. Dies ist insbesondere wünschenswert, wenn das Fahrzeug ein autonomes Fahrzeug ist.

Vorzugsweise wird der Schritt Ermitteln, ob sich ein erstes Fahrzeugmodul in der ersten Kontrollzone befindet von dem ersten Fahrzeugmodul durchgeführt. Hierdurch kann eine besonders hohe Ausfallsicherheit gewährleistet werden. Es kann jedoch auch vorgesehen sein, dass das Ermitteln, ob sich ein erstes Fahrzeug in der ersten Kontrollzone befindet durch das Kontrollmodul durchgeführt wird. Vorzugsweise ist das Kontrollmodul dann dazu ausgebildet, mittels der Kontrollmodul-Antenneneinheit ein Signal an dem Fahrzeugmodul bereitzustellen, das einen Aufenthalt des Fahrzeugmoduls in der Kontrollzone repräsentiert.

In einer bevorzugten Weiterbildung weist das Verfahren ferner auf: Definieren einer ersten Fahrzeugwarnzone für das erste Fahrzeug, die ein Teilbereich eines dritten elektromagnetischen Feldes ist, das von einer ersten Fahrzeug-Antenneneinheit an dem ersten Fahrzeug bereitgestellt wird; Ermitteln ob sich ein zweites Fahrzeugmodul, das auf die erste Fahrzeugwarnzone abgestimmt ist, in der ersten Fahrzeugwarnzone befindet; Erfassen eines in einer zweiten Fahrzeug-Verarbeitungseinheit des zweiten Fahrzeugmoduls gesetzten Statusindikators; Vergleichen des in der ersten Fahrzeug-Verarbeitungseinheit gesetzten Statusindikators mit dem in der zweiten Fahrzeug-Verarbeitungseinheit gesetzten Statusindikator; und Durchführen zumindest einer Folgeoperation, wenn der in der zweiten Fahrzeug-Verarbeitungseinheit gesetzte Statusindikator sich von dem in der ersten Fahrzeug-Verarbeitungseinheit gesetzten Statusindikator unterscheidet oder gleich ist. Auch für das erste Fahrzeug kann daher eine Fahrzeugwarnzone definiert werden. Durch den Vergleich, der in der ersten Fahrzeug-Verarbeitungseinheit und der zweiten Fahrzeug-Verarbeitungseinheit gesetzten Statusindikatoren, kann zwischen Fahrzeugen, die sich im Bereich der Kontrollzone befinden oder befunden haben, und Fahrzeugen, die sich nicht in der Kontrollzone befinden oder sich innerhalb der Freigabezone befinden, unterschieden werden. Somit kann in vorteilhafter Weise erreicht werden, dass die Folgeoperation nur durchgeführt wird, wenn sich die in den Fahrzeugmodulen gesetzten Statusindikatoren unterscheiden, wobei sich die Statusindikatoren auch dann unterscheiden, wenn nur in einer der Verarbeitungseinheiten ein Statusindikator gesetzt ist. Deckt beispielsweise die Kontrollzone eine Laderampe ab, wird der Sicherheit-Statusindikator gesetzt, wenn das Fahrzeug auf die Ladefläche eines Transportfahrzeugs auffährt. Oftmals sind mehrere Transportfahrzeuge benachbart zueinander positioniert und werden zeitgleich entladen. Wird ein zweites Transportfahrzeug durch ein zweites Fahrzeug entladen, wird beim Auffahren auf dessen Ladefläche, in einer zweiten Fahrzeug-Verarbeitungseinheit ebenfalls der Sicherheit-Statusindikator gesetzt. Ein Statusindikator der ersten Fahrzeug-Verarbeitungseinheit und ein Statusindikator der zweiten Fahrzeug-Verarbeitungseinheit stimmen überein und es wird keine Folgeoperation durchgeführt. Vorzugsweise können auch mehrere erste Fahrzeugwarnzonen für das erste Fahrzeug definiert werden, die besonders bevorzugt variierende geometrische Definitionen aufweisen. So kann beispielsweise eine kleinere kreisförmige Fahrzeugwarnzone von einer größeren Fahrzeugwarnzone umgeben sein.

Bevorzugt weist das Verfahren ferner auf: Ändern einer Konfiguration der ersten Fahrzeugwarnzone, in Antwort auf das Ermitteln des ersten Fahrzeugmoduls in der Kontrollzone und/oder Ändern einer Konfiguration der ersten Fahrzeugwarnzone, wenn ermittelt wird, dass sich das erste Fahrzeugmodul in der Freigabezone befindet. Vorzugsweise umfasst die Konfiguration der Fahrzeugwarnzone zumindest eine geometrische Konfiguration der Fahrzeugwarnzone. So kann eine Größe der Fahrzeugwarnzone vorzugsweise in Antwort auf das Ermitteln des ersten Fahrzeugmoduls in der Kontrollzone reduziert werden. Ferner bevorzugt kann auch die geometrische Konfiguration geändert werden. Beispielsweise kann die erste Fahrzeugwarnzone von einer runden Fahrzeugwarnzone, die gleichmäßig um das Fahrzeug definiert ist, zu einer sich in Fahrtrichtung des Fahrzeugs langgestreckt nach vorne erstreckenden Fahrzeugwarnzone geändert werden, wenn das erste Fahrzeugmodul in der Kontrollzone ermittelt wird. Bevorzugt weist das Verfahren ferner auf: Senden eines in der ersten Fahrzeug-Verarbeitungseinheit des ersten Fahrzeugmoduls gesetzten Statusindikators, vorzugsweise an das zweite Fahrzeugmodul, wenn ermittelt wird, dass sich das zweite Fahrzeugmodul in der ersten Fahrzeugwarnzone befindet.

Vorzugsweise ist das erste Fahrzeugmodul dazu ausgebildet, eine Konfiguration der ersten Fahrzeugwarnzone an das zweite Fahrzeugmodul zu senden, wenn ermittelt wird, dass sich das zweite Fahrzeugmodul in der ersten Fahrzeugwarnzone befindet. Besonders bevorzugt umfasst das Verfahren den Schritt Senden des in der ersten Fahrzeug-Verarbeitungseinheit gesetzten Statusindikators an das zweite Fahrzeugmodul, wenn ermittelt wird, dass sich das zweite Fahrzeugmodul innerhalb der ersten Fahrzeugwarnzone befindet.

Gemäß einer bevorzugten Weiterbildung, weist das Verfahren ferner auf: Definieren einer zweiten Fahrzeugwarnzone für das zweite Fahrzeug, die ein Teilbereich eines vierten dreidimensionalen elektromagnetischen Feldes ist, das von einer zweiten Fahrzeug-Antenneneinheit bereitgestellt wird; Empfangen einer Konfiguration der zweiten Fahrzeugwarnzone des zweiten Fahrzeugs an dem ersten Fahrzeugmodul; Ermitteln durch das erste Fahrzeugmodul, ob sich das erste Fahrzeugmodul in der zweiten Fahrzeugwarnzone befindet. Besonders bevorzugt wird ein in der ersten Fahrzeug-Verarbeitungseinheit gesetzter Statusindikator nur gesendet, wenn ermittelt wird, dass sich das erste Fahrzeugmodul in der zweiten Fahrzeugwarnzone befindet. Es soll verstanden werden, dass bevorzugt beide Fahrzeugmodule zum Senden einer Konfiguration der jeweiligen von diesem Fahrzeugmodul definierten Warnzone ausgebildet sein können. Ferner sind bevorzugt beide Fahrzeugmodule zum Senden des jeweils gesetzten Statusindikators ausgebildet.

Bevorzugt weist das Verfahren ferner auf: Ermitteln, ob sich das erste Fahrzeugmodul und das zweite Fahrzeugmodul einander annähern. Vorzugsweise sind sowohl das erste Fahrzeugmodul als auch das zweite Fahrzeugmodul dazu ausgebildet, zu ermitteln, ob sich das erste Fahrzeugmodul und das zweite Modul einander annähern. Es kann jedoch auch vorgesehen sein, dass nur das erste Fahrzeugmodul oder nur das zweite Fahrzeugmodul dazu ausgebildet ist, zu ermitteln, dass sich die Fahrzeugmodule einander annähern. Vorzugsweise wird die zumindest eine Folgeoperation nur durchgeführt, wenn ermittelt wird, dass sich das erste Fahrzeugmodul und das zweite Fahrzeugmodul einander annähern.

In einer bevorzugten Weiterbildung des Verfahrens weist die Folgeoperation zumindest einen der folgenden Schritte auf: Bereitstellen eines Warnsignals an dem ersten Fahrzeug; Bereitstellen eines Warnsignals an dem zweiten Fahrzeug; Beschränken zumindest eines Bewegungsfreiheitsgrades des ersten Fahrzeugs; und/oder Beschränken zumindest eines Bewegungsfreiheitsgrades des zweiten Fahrzeugs. Es soll verstanden werden, dass die Beschränkung des Bewegungsfreiheitsgrades des ersten Fahrzeugs und die Beschränkung des Bewegungsfreiheitsgrades des zweiten Fahrzeugs identisch sein können. Es ist aber auch möglich, dass verschiedene Bewegungsfreiheitsgrade der Fahrzeuge beschränkt werden, oder dass ein identischer Bewegungsfreiheitsgrad in verschiedenem Maße beschränkt wird. Vorzugsweise ist die Beschränkung des Bewegungsfreiheitsgrades beim Annähern identisch zu derjenigen Beschränkung des Bewegungsfreiheitsgrades des Fahrzeugs, wenn der Sicherheit-Statusindikator gesetzt ist.

Bevorzugt deckt die erste Kontrollzone einen Übergangsbereich zwischen einer Laderampe und einem zu be- oder entladenden Transportfahrzeug ab. Es kann jedoch auch vorgesehen sein, dass die Kontrollzone einen Zufahrtsbereich zu einem Gang, insbesondere einem von Regalen gebildeten Gang, abdeckt.

In einer bevorzugten Ausführungsform weist das Verfahren auf: Ermitteln, ob sich das auf dem ersten Fahrzeug montierte erste Fahrzeugmodul auf einer Ladefläche des Transportfahrzeugs befindet. Vorzugsweise wird ermittelt, dass sich das erste Fahrzeugmodul auf der Ladefläche des Transportfahrzeugs befindet, wenn das Fahrzeugmodul die Kontrollzone an einem vordefinierten Grenzbereich verlässt. Besonders bevorzugt weist das Verfahren den Schritt auf: Ermitteln einer Fahrtrichtung des Fahrzeugs, wenn das erste Fahrzeugmodul die Kontrollzone verlässt. Beispielsweise kann ermittelt werden, dass das Fahrzeug auf einer Ladefläche des Transportfahrzeugs angeordnet ist, wenn das Fahrzeugmodul die Kontrollzone in einer bestimmten Richtung verlässt.

Vorzugsweise weist das Verfahren ferner auf: Ermitteln, ob sich das Transportfahrzeug bewegt; und zumindest einen der Schritte: Bereitstellen eines Warnsignals am ersten Fahrzeugmodul; Bremsen des ersten Fahrzeugs bis zum Stillstand; wenn ermittelt wird, dass sich das Transportfahrzeug bewegt und sich das erste Fahrzeugmodul auf der Ladefläche des Transportfahrzeugs befindet. Durch diese Schritte kann vermieden werden, dass das erste Fahrzeug von der Ladefläche des Transportfahrzeugs stürzt, wenn sich das Transportfahrzeug versehentlich in Bewegung setzt und dadurch von der Laderampe entfernt.

In einer bevorzugten Weiterbildung weist das Verfahren auf: Ermitteln, ob das auf dem ersten Fahrzeug montierte erste Fahrzeugmodul die Ladefläche des Transportfahrzeugs verlässt. Hierdurch kann sichergestellt werden, dass vor einem Abfahren des Transportfahrzeugs alle Fahrzeuge die Ladefläche verlassen haben, wodurch Unfälle und Diebstähle vermieden werden können. Vorzugsweise weist das Verfahren ferner auf: Ermitteln, einer Verweilzeit des ersten Fahrzeugmoduls auf der Ladefläche des Transportfahrzeugs. Besonders bevorzugt weist das Verfahren zusätzlich auf: Vergleichen der ermittelten Verweilzeit des ersten Fahrzeugmoduls auf der Ladefläche mit einem vordefinierten Verweilzeit-Grenzwert und ferner bevorzugt Bereitstellen eines Verweilzeit-Warnsignals, wenn die ermittelte Verweilzeit den Verweilzeit-Grenzwert übersteigt. Beispielsweise kann eine den Verweilzeit-Grenzwert übersteigende Verweilzeit eines Fahrzeugmoduls auf eine Notsituation auf der Ladefläche hinweisen und somit eine Sicherheit erhöht. Ferner können Diebstähle von Fahrzeugen vermieden werden.

Vorzugsweise weist das Verfahren ferner auf: Erfassen eines Bildes des ersten Fahrzeugs, des Transportfahrzeugs und/oder einer Ladung des ersten Fahrzeugs, wenn ermittelt wird, dass das erste Fahrzeugmodul die Ladefläche des Transportfahrzeugs verlässt. Das Erfassen eines Bildes ermöglicht eine Dokumentation des Zustands des Transportfahrzeugs, der Ladung und/oder des ersten Fahrzeugs zum Zeitpunkt des Be- oder Entladens, wodurch etwaige Beschädigungen rückverfolgbar sind. Beispielsweise kann ermittelt werden, ob eine Warensendung bereits bei der Anlieferung beschädigt war.

Bevorzugt weist das Verfahren ferner auf: Ermitteln eines Öffnungszustands eines in der ersten Kontrollzone angeordneten Tores, wobei der Schritt Überwachen einer ersten Kontrollzone nur dann erfolgt, wenn Ermittelt wird, dass das Tor geöffnet ist. Hierdurch kann in vorteilhafter Weise erreicht werden, dass der Sicherheit-Statusindikator nur beim Durchfahren des Tores gesetzt wird. Ist das Tor hingegen geschlossen, ist das Setzen des Sicherheit-Statusindikator in der Regel nicht notwendig. Ferner muss ein geschlossenes Tor in der Regel nicht überwacht werden, wodurch Ressourcen eingespart werden können.

Gemäß einem zweiten Aspekt löst die Erfindung die eingangs genannte Aufgabe mit einem Logistiksicherheitssystem zum Sichern eines Logistikbereichs, mit einem Kontrollmodul, aufweisend eine Kontroll-Antenneneinheit, mit zumindest einer ersten Kontroll-Antenne, welche dazu ausgebildet ist, in einer vorbestimmten räumlichen Beziehung zu einer Ladezone des Logistikbereichs montiert zu werden, und ein erstes dreidimensionales elektromagnetisches Feld zu erzeugen, eine mit der Kontroll-Antenneneinheit verbundene Kontroll-Verarbeitungseinheit, die dazu angepasst ist, wenigstens eine Kontrollzone für die Ladezone zu definieren, die ein Teilbereich des ersten dreidimensionalen elektromagnetischen Feldes ist; einem Freigabemodul, aufweisend eine Freigabe-Antenneneinheit, mit zumindest einer ersten Freigabe-Antenne, welche dazu ausgebildet ist, ein zweites dreidimensionales elektromagnetisches Feld zu erzeugen, eine mit der Freigabe-Antenneneinheit verbundene Freigabe-Verarbeitungseinheit, die dazu angepasst ist, wenigstens eine Freigabezone zu definieren, die ein Teilbereich des zweiten dreidimensionalen elektromagnetischen Feldes ist, und mit einem ersten Fahrzeugmodul für ein erstes Fahrzeug, aufweisend eine erste Fahrzeug-Antenneneinheit, mit zumindest einer ersten Fahrzeug-Antenne, welche dazu ausgebildet ist, in einer vorbestimmten räumlichen Beziehung an dem ersten Fahrzeug montiert zu werden, und ein drittes dreidimensionales elektromagnetisches Feld zu erzeugen, und eine mit der ersten Fahrzeug-Antenneneinheit verbundene erste Fahrzeug-Verarbeitungseinheit, welche dazu angepasst ist, wenigstens eine erste Fahrzeugwarnzone für das erste Fahrzeug zu definieren, die ein Teilbereich des dritten elektromagnetischen Feldes ist, wobei die erste Fahrzeug-Verarbeitungseinheit dazu angepasst ist, mittels der ersten Fahrzeug-Antenneneinheit zu ermitteln, ob sich das auf die erste Fahrzeug-Antenneneinheit abgestimmte Kontrollmodul und/oder das auf die erste Fahrzeug-Antenneneinheit abgestimmte Freigabemodul innerhalb der ersten Fahrzeugwarnzone befindet, wobei die erste Fahrzeug-Verarbeitungseinheit dazu ausgebildet ist, in Antwort auf ein Ermitteln des Kontrollmoduls in der ersten Fahrzeugwarnzone einen Sicherheits-Statusindikator zu setzen, und in Antwort auf ein Ermitteln des Freigabemoduls in der ersten Fahrzeugwarnzone den Sicherheits-Statusindikator zu löschen. Vorzugsweise weist die Kontroll-Antenneneinheit mehrere Kontroll-Antennen auf, wobei die erste Kontroll-Verarbeitungseinheit besonders bevorzugt dazu ausgebildet ist, eine geometrische Form der Kontrollzone zu definieren. Ebenso bevorzugt können auch die Fahrzeug-Antenneneinheit und/oder die Freigabe-Antenneneinheit mehrere Antennen aufweisen. So kann die Kontrollzone in einer vertikalen Projektion beispielsweise trapezförmig, rechteckig, quadratisch, dreieckig, elliptisch oder rund ausgebildet sein. Vorzugsweise sind die Kontrollzone und die Freigabezone benachbart zueinander angeordnet. Weiterhin soll verstanden werden, dass das Logistiksicherheitssystem auch mehrere Kontrollzonen und/oder mehrere Freigabezonen aufweisen kann.

Es soll verstanden werden, dass das Verfahren gemäß dem ersten Aspekt der Erfindung und das Logistiksicherheitssystem nach dem zweiten Aspekt der Erfindung gleiche und ähnliche Unteraspekte aufweisen, wie sie insbesondere in den abhängigen Ansprüchen niedergelegt sind. Insofern wird für weitere Ausgestaltungen des Logistiksicherheitssystems und deren Vorteile auch und vollumfänglich auf die obige Beschreibung zum ersten Aspekt der Erfindung verwiesen.

In einer ersten bevorzugten Weiterbildung ist die Fahrzeug-Verarbeitungseinheit dazu ausgebildet, in Antwort auf ein Ermitteln des Freigabemoduls in der ersten Fahrzeugwarnzone den Sicherheit-Statusindikator durch einen zweiten Statusindikator zu ersetzen.

Vorzugsweise ist das erste Fahrzeugmodul dazu ausgebildet, eine Konfiguration der ersten Fahrzeugwarnzone an das Kontrollmodul und/oder das Freigabemodul zu senden, wenn sich dieses in Reichweite der ersten Fahrzeug-Antenneneinheit befindet. Bevorzugt ist das Kontrollmodul dazu ausgebildet, die Konfiguration der Kontrollzone an das erste Fahrzeugmodul zu senden, wenn sich dieses in Reichweite des Kontrollmoduls befindet. Weiterhin bevorzugt ist das Freigabemodul dazu ausgebildet, die Konfiguration der Freigabezone an das erste Fahrzeugmodul zu senden, wenn sich dieses in Reichweite des Freigabemoduls befindet. Durch ein Senden der Konfigurationen der Kontrollzone, der Fahrzeugwarnzone und/oder der Freigabezone an ein empfangendes Modul kann sichergestellt werden, dass das empfangende Modul bestimmen kann, ob es sich innerhalb der entsprechenden Zone des sendenden Moduls befindet, wodurch in vorteilhafter Weise eine Redundanz des Systems erreicht werden kann.

In einer bevorzugten Ausführungsform ist die erste Fahrzeug-Verarbeitungseinheit dazu ausgebildet, mit einer Steuereinheit des ersten Fahrzeugs verbunden zu werden, und dazu ausgebildet, einen Bewegungsfreiheitsgrad des ersten Fahrzeugs zu beschränken, wenn ein Sicherheits-Statusindikator gesetzt ist. Zum Beschränken eines Bewegungsfreiheitsgrades kann die erste Fahrzeug-Verarbeitungseinheit vorzugsweise ein Beschränkungssignal an der Steuereinheit des ersten Fahrzeugs bereitstellen. Ferner kann die Fahrzeug-Verarbeitungseinheit bevorzugt auch zum Empfangen von Signalen der Steuereinheit des ersten Fahrzeugs ausgebildet sein. Bezüglich der Definition des Bewegungsfreiheitsgrades wird auf die Ausführungen zum ersten Aspekt der Erfindung verwiesen.

Gemäß einer bevorzugten Weiterbildung weist das Logistiksicherheitssystem ferner ein zweites Fahrzeugmodul für ein zweites Fahrzeug auf, mit einer zweiten Fahrzeug-Antenneneinheit, mit zumindest einer zweiten Fahrzeug-Antenne, welche dazu ausgebildet ist, in einer vorbestimmten räumlichen Beziehung an dem zweiten Fahrzeug montiert zu werden, und ein viertes dreidimensionales elektromagnetisches Feld zu erzeugen, und eine mit der zweiten Fahrzeug-Antenneneinheit verbundene zweite Fahrzeug-Verarbeitungseinheit, welche dazu angepasst ist, wenigstens eine zweite Fahrzeugwarnzone für das zweite Fahrzeug zu definieren, die ein Teilbereich des vierten elektromagnetischen Feldes ist, wobei die zweite Fahrzeug-Verarbeitungseinheit dazu angepasst ist, mittels der zweiten Fahrzeug-Antenneneinheit zu ermitteln, ob sich das auf die zweite Fahrzeug-Antenneneinheit abgestimmte Kontrollmodul und/oder das auf die Fahrzeug-Antenneneinheit abgestimmte Freigabemodul innerhalb der zweiten Fahrzeugwarnzone befindet, wobei die zweite Fahrzeug-Verarbeitungseinheit dazu ausgebildet ist, in Antwort auf ein Ermitteln des Kontrollmoduls in der zweiten Fahrzeugwarnzone einen Sicherheits-Statusindikator zu setzen, und in Antwort auf ein Ermitteln des Freigabemoduls in der zweiten Fahrzeugwarnzone den Sicherheits-Statusindikator zu löschen. Vorzugsweise sind das erste Fahrzeugmodul und das zweite Fahrzeugmodul zueinander identisch. Ebenso bevorzugt kann die zweite Fahrzeug-Verarbeitungseinheit dazu ausgebildet sein, in Antwort auf ein Ermitteln des Freigabemoduls in der zweiten Fahrzeugwarnzone den Sicherheits-Statusindikator durch einen zweiten Statusindikator zu ersetzen. Auch die zweite Fahrzeug-Antenneneinheit kann vorzugsweise mehrere Antennen aufweisen.

Vorzugsweise ist die erste Fahrzeug-Verarbeitungseinheit dazu ausgebildet, mittels der ersten Fahrzeug-Antenneneinheit zu ermitteln, ob sich das auf die erste Fahrzeug-Antenneneinheit abgestimmte zweite Fahrzeugmodul innerhalb der ersten Fahrzeugwarnzone befindet. Vorzugsweise ermittelt die erste Fahrzeug-Verarbeitungseinheit, dass sich ein zweites Fahrzeugmodul innerhalb der ersten Fahrzeugwarnzone befindet, unter Verwendung eines von dem zweiten Fahrzeugmodul bereitgestellten Signals.

In einer bevorzugten Ausführungsform ist das zweite Fahrzeugmodul dazu ausgebildet, einen in der zweiten Fahrzeug-Verarbeitungseinheit gesetzten Statusindikator an das erste Fahrzeugmodul zu senden, wenn sich dieses in Reichweite der zweiten Fahrzeug-Antenneneinheit, vorzugsweise innerhalb der zweiten Fahrzeugwarnzone, befindet. Es kann jedoch auch vorgesehen sein, dass das zweite Fahrzeugmodul den in der zweiten Fahrzeug-Verarbeitungseinheit gesetzten Statusindikator durchgehend sendet und/oder mit einer vorbestimmten Taktfrequenz sendet. Durch das Senden des Statusindikators kann sichergestellt werden, dass der in der zweiten Fahrzeug-Verarbeitungseinheit gesetzte Statusindikator an der ersten Fahrzeug-Verarbeitungseinheit vorliegt. Vorzugsweise ist die erste Fahrzeug-Verarbeitungseinheit dazu ausgebildet, einen in der ersten Fahrzeug-Verarbeitungseinheit gesetzten Statusindikator mit dem in der zweiten Fahrzeug-Verarbeitungseinheit gesetzten Statusindikator zu vergleichen. In analoger Weise ist vorzugsweise auch die zweite Fahrzeug-Verarbeitungseinheit dazu ausgebildet, die in der ersten Fahrzeug-Verarbeitungseinheit und in der zweiten Fahrzeug-Verarbeitungseinheit gesetzten Statusindikator zu vergleichen.

Vorzugsweise ist das erste Fahrzeugmodul dazu ausgebildet, basierend auf dem empfangenen Statusindikator des zweiten Fahrzeugmoduls zu bestimmen, ob der Statusindikator des ersten Fahrzeugmoduls und der Statusindikator des zweiten Fahrzeugmoduls voneinander abweichen. Ferner bevorzugt ist das erste Fahrzeugmodul dazu ausgebildet, ein Warnsignal auszugeben, wenn bestimmt wird, dass der Statusindikator des ersten Fahrzeugmoduls und der Statusindikator des zweiten Fahrzeugmoduls voneinander abweichen. Es kann auch vorgesehen sein, dass das erste Fahrzeugmodul dazu ausgebildet ist, einen Bewegungsfreiheitsgrad des ersten Fahrzeugs zu beschränken, wenn bestimmt wird, dass der Statusindikator des ersten Fahrzeugmoduls und der Statusindikator des zweiten Fahrzeugmoduls voneinander abweichen. Ein Beschränken des Bewegungsfreiheitsgrades des ersten Fahrzeugs erfolgt also vorzugsweise nur dann, wenn die in den Fahrzeug-Verarbeitungseinheiten gesetzten Statusindikatoren voneinander abweichen.

In einer bevorzugten Ausführungsform ist die zweite Fahrzeug-Verarbeitungseinheit dazu ausgebildet, mittels der zweiten Fahrzeug-Antenneneinheit zu ermitteln, ob sich das auf die zweite Fahrzeug-Antenneneinheit abgestimmte erste Fahrzeugmodul innerhalb der zweiten Fahrzeugwarnzone befindet. Vorzugsweise ist das erste Fahrzeugmodul dazu ausgebildet, einen in der ersten Fahrzeug-Verarbeitungseinheit gesetzten Statusindikator an das zweite Fahrzeugmodul zu senden, wenn sich dieses in Reichweite der ersten Fahrzeug-Antenneneinheit befindet. Bevorzugt ist das zweite Fahrzeugmodul dazu ausgebildet, basierend auf dem empfangenen Statusindikator des ersten Fahrzeugmoduls zu bestimmen, ob der Statusindikator des zweiten Fahrzeugmoduls und der Statusindikator des ersten Fahrzeugmoduls voneinander abweichen. In einer bevorzugten Ausgestaltung ist das zweite Fahrzeugmodul dazu ausgebildet, ein Warnsignal auszugeben, wenn bestimmt wird, dass der Statusindikator des zweiten Fahrzeugmoduls und der Statusindikator des ersten Fahrzeugmoduls voneinander abweichen. Ebenso kann das zweite Fahrzeugmodul dazu ausgebildet sein, zumindest einen Bewegungsfreiheitsgrad des zweiten Fahrzeugs zu beschränken, wenn bestimmt wird, dass der Statusindikator des zweiten Fahrzeugmoduls und der Statusindikator des ersten Fahrzeugmoduls voneinander abweichen. Vorzugsweise sind sowohl die erste Fahrzeug-Verarbeitungseinheit als auch die zweite Fahrzeug-Verarbeitungseinheit dazu ausgebildet, einen Vergleich der Statusindikator durchzuführen.

Es soll verstanden werden, dass für das erste Fahrzeug und das zweite Fahrzeug voneinander verschiedene Bewegungsfreiheitsgrade beschränkt werden können und/oder, dass identische Bewegungsfreiheitsgrade in verschiedenem Maße beschränkt werden können. Vorzugsweise ist die erste Fahrzeug-Verarbeitungseinheit und/oder die zweite Fahrzeug-Verarbeitungseinheit dazu ausgebildet, den Bewegungsfreiheitsgrad in Abhängigkeit eines Fahrzeugzustands und/oder einer vordefinierten Fahrzeugeigenschaft zu beschränken. So kann beispielsweise für besonders hohe Belastungen einer Hubeinheit eines Fahrzeugs, die auf den Transport einer besonders hohen Last hinweisen, eine Beschleunigung des Fahrzeugs stärker beschränkt werden als für geringe Belastungen. Ferner kann ein minimal zulässiger Kurvenradius eines großen Fahrzeugs größer sein als ein korrespondierender zulässiger Kurvenradius eines kleineren Fahrzeugs.

In einer bevorzugten Weiterbildung weist das Kontrollmodul eine Erfassungseinrichtung auf, wobei die Kontroll-Verarbeitungseinheit dazu angepasst ist, mittels der Kontroll-Antenneneinheit zu ermitteln, ob sich ein auf die Kontroll-Antenneneinheit abgestimmtes erstes Fahrzeugmodul und/oder zweites Fahrzeugmodul innerhalb der ersten Kontrollzone befindet, und wobei die Kontroll-Verarbeitungseinheit dazu angepasst ist, die Erfassungseinrichtung zum Erfassen eines Bildes und/oder Videos auszulösen, wenn ermittelt wird, dass sich das erste Fahrzeugmodul und/oder das zweite Fahrzeugmodul innerhalb der Kontrollzone befindet. Es kann jedoch auch vorgesehen sein, dass die Erfassungseinrichtung an dem ersten Fahrzeug montiert ist und von der ersten Fahrzeug-Verarbeitungseinheit ausgelöst wird. Die Erfassungseinrichtung ist vorzugsweise als Kamera, insbesondere Digitalkamera, ausgebildet.

Vorzugsweise ist das Kontrollmodul dazu ausgebildet, zu ermitteln, ob ein Fahrzeugmodul sich zum zweiten Mal innerhalb eines vordefinierten Zeitraums innerhalb der Kontrollzone befindet, und die Erfassungseinrichtung nur dann auszulösen, wenn ermittelt wird, dass sich das Fahrzeugmodul zum zweiten Mal innerhalb des vordefinierten Zeitraums innerhalb der Kontrollzone befindet. Ist die erste Kontrollzone an einem Übergang zwischen einer Laderampe und einer Ladefläche eines Transportfahrzeugs angeordnet, wird diese beim Be- oder Entladen des Transportfahrzeugs typischerweise zweimal von einem Flurförderfahrzeug durchfahren. Das Fahrzeug fährt über die Laderampe auf die Ladefläche des Transportfahrzeugs und durchquert dabei ein erstes Mal die Kontrollzone, wobei der Sicherheit-Statusindikator gesetzt wird. Auf der Ladefläche nimmt das Fahrzeug die Ladung auf und verlässt anschließend die Ladefläche, wobei die Kontrollzone zum zweiten Mal durchquert wird. Ein durchschnittlicher Zeitraum, der für diesen Vorgang benötigt wird, ist für verschiedene Arten von Ladung und verschiedene Größen von Transportfahrzeugen, beispielsweise aus einerwirtschaftlichen Kalkulation, Versuchen oder basierend auf Erfahrungswerten, bekannt, sodass dieser Zeitraum vordefiniert werden kann. Wird zum zweiten Mal innerhalb dieses vordefinierten Zeitraums ermittelt, dass sich das Fahrzeugmodul innerhalb der Kontrollzone befindet, wird die Erfassungseinrichtung ausgelöst. Dies ist insbesondere dann der Fall, wenn das Fahrzeug, vorzugsweise Flurförderfahrzeug, die Ladefläche mit der Ladung verlässt. Es soll verstanden werden, dass eine solche Funktion in analoger Weise auch für Lagerbereiche oder andere Logistikbereiche vorgesehen sein kann. Durch das Vorsehen des vordefinierten Zeitraums kann erreicht werden, dass Fahrzeuge, welche die Kontrollzone nur während einer Vorbeifahrt durchqueren, die Erfassungseinrichtung nicht auslösen. Ferner kann das Auslösen auch ein Steuern der Erfassungseinrichtung für einen vorbestimmten Zeitraum und/oder bis zu einem vorbestimmten Ereignis sein. Das vorbestimmte Ereignis kann beispielsweise ein Verlassen der Kontrollzone durch das Fahrzeugmodul sein.

Vorzugsweise ist die Kontroll-Verarbeitungseinheit dazu ausgebildet, unter Verwendung der Erfassungseinrichtung eine Ladung des ersten Fahrzeugs und/oder des zweiten Fahrzeugs zu ermitteln. Somit kann sichergestellt werden, dass nicht versehentlich potentielles Gefahrengut durch die Kontrollzone transportiert wird.

In einer bevorzugten Weiterbildung weist das erste Fahrzeugmodul eine Fahrzeug-Erfassungseinrichtung auf, wobei die erste Fahrzeug-Verarbeitungseinheit dazu angepasst ist, die Fahrzeug-Erfassungseinrichtung zum Erfassen eines Bildes und/oder Videos auszulösen. Das Erfassen eines Bildes und/oder Videos ermöglicht beispielsweise ein Nachverfolgen potenziell gefährlicher Ladung oder ein Ermitteln von Gefahrenbereichen im Fahrweg des Fahrzeugs. So kann durch die Fahrzeug-Erfassungseinrichtung eine Sicherheit des Logistiksicherheitssystems weiter erhöht werden.

Vorzugsweise ist die erste Fahrzeug-Verarbeitungseinheit dazu angepasst ist, mittels der ersten Fahrzeug-Antenneneinheit zu ermitteln, ob sich ein auf die erste Fahrzeug-Antenneneinheit abgestimmtes Kontrollmodul innerhalb der ersten Fahrzeugwarnzone befindet, und die Fahrzeug-Erfassungseinrichtung auszulösen, wenn ermittelt wird, dass sich das Kontrollmodul innerhalb der ersten Fahrzeugwarnzone befindet.

Vorzugsweise ist das erste Fahrzeugmodul dazu ausgebildet, zu ermitteln, ob sich ein Kontrollmodul zum zweiten Mal innerhalb eines zweiten vordefinierten Zeitraums innerhalb der ersten Fahrzeugwarnzone befindet, und die Fahrzeug-Erfassungseinrichtung nur dann auszulösen, wenn ermittelt wird, dass sich das Kontrollmodul zum zweiten Mal innerhalb des zweiten vordefinierten Zeitraums innerhalb der ersten Fahrzeugwarnzone befindet.

In einer bevorzugten Ausführungsform ist die Fahrzeug-Erfassungseinrichtung nur auslösbar, wenn ein vorbestimmter Statusindikator gesetzt ist. So kann die Fahrzeug-Erfassungseinrichtung beispielsweise nur ausgelöst werden, wenn sich ein mit dem Fahrzeugmodul verbundenes Fahrzeug in einem sicherheitskritischen Bereich befindet und der Sicherheits-Statusindikator gesetzt ist. Hierdurch wird erreicht, dass die Fahrzeug-Erfassungseinrichtung nur in potentiell gefährlichen Situationen ausgelöst wird. Dies erleichtert ein Auswerten der erfassten Bilder und/oder Videos, wodurch Information zu sicherheitskritischen Aspekten leichter aus den erfassten Bildern und/oder Videos ermittelt werden können. Eine Sicherheit des Systems wird somit weiter erhöht. Vorzugsweise ist der vorbestimmte Statusindikator der Sicherheit-Statusindikator und/oder der zweite Statusindikator.

In einer bevorzugten Ausgestaltung weist das erste Fahrzeugmodul einen Ladungssensor auf und die erste Fahrzeug-Verarbeitungseinheit ist dazu ausgebildet, unter Verwendung des Ladungssensors eine Änderung des Ladungszustands des ersten Fahrzeugs zu ermitteln und die Fahrzeugs-Erfassungseinrichtung in Antwort auf das Ermitteln einer Änderung des Ladungszustands des ersten Fahrzeugs auszulösen. Eine Änderung des Ladungszustands ist vorzugsweise ein Aufnehmen und/oder ein Absetzen einer Ladung des ersten Fahrzeugs. Durch das Auslösen der Fahrzeug-Erfassungseinrichtung beim Ändern des Ladungszustands kann die Sicherheit weiter erhöht werden. So kann beispielsweise unter Verwendung des Erfassten Bildes und/oder des erfassten Videos ermittelt werden, ob ein Gefahrgut korrekt abgesetzt oder aufgenommen wurde. Gegebenenfalls kann dann ein Fahrer des ersten Fahrzeugs gewarnt werden.

Vorzugsweise ist die Fahrzeug-Verarbeitungseinheit dazu ausgebildet, das Auslösen der Fahrzeug-Erfassungseinrichtung um eine Verzögerungszeit zeitverzögert zu bewirken. Das Auslösen kann also um den Betrag der Verzögerungszeit nach dem Ermitteln der Änderung des Ladungszustands und/oder dem Ermitteln des Kontrollmoduls innerhalb der ersten Fahrzeugwarnzone ausgelöst werden.

Bevorzugt ist die erste Fahrzeug-Verarbeitungseinheit dazu ausgebildet ist, unter Verwendung der Fahrzeug-Erfassungseinrichtung eine Ladung des ersten Fahrzeugs zu ermitteln.

In einer bevorzugten Ausführungsform ist das Kontrollmodul dazu ausgebildet, unter Verwendung des Statusindikators des Fahrzeugmoduls zu ermitteln, ob ein mit einem Fahrzeugmodul versehenes Fahrzeug zum Befahren der Kontrollzone berechtigt ist. Ferner bevorzugt ist das Kontrollmodul dazu ausgebildet, in Antwort auf eine mangelnde Berechtigung des ersten Fahrzeugs zum Befahren der Kontrollzone, ein Berechtigungsmangelsignal bereitzustellen. Es kann jedoch auch vorgesehen sein, dass das Fahrzeugmodul zum Ermitteln der Berechtigung und vorzugsweise zum Bereitstellen des Berechtigungsmangelsignals ausgebildet ist. Beispielsweise kann das Kontrollmodul überwachen, ob ein Flurförderfahrzeug zum Beladen des entsprechenden Transportfahrzeugs vorgesehen ist. So kann ein akustisches Signal ausgegeben werden, wenn ein falsches Transportfahrzeug angefahren wird. Hierdurch kann das Risiko für Unfälle zwischen mehreren Fahrzeugen, die irrtümlich dasselbe Transportfahrzeug ansteuern, reduziert werden.

Gemäß einem dritten Aspekt löst die Erfindung die eingangs genannte Aufgabe durch die Verwendung eines Logistiksicherheitssystems gemäß dem zweiten Aspekt der Erfindung zum Durchführen der Schritte eines Verfahrens gemäß dem ersten Aspekt der Erfindung.

Es soll verstanden werden, dass die Verwendung gemäß dem dritten Aspekt der Erfindung, das Verfahren gemäß dem ersten Aspekt der Erfindung und das Logistiksicherheitssystem nach dem zweiten Aspekt der Erfindung gleiche und ähnliche Unteraspekte aufweisen, wie sie insbesondere in den abhängigen Ansprüchen niedergelegt sind. Insofern wird für weitere Ausgestaltungen der Verwendung und deren Vorteile auch und vollumfänglich auf die obige Beschreibung zum ersten und zweiten Aspekt der Erfindung verwiesen.

In einem vierten Aspekt löst die Erfindung die eingangs genannte Aufgabe mit einem Computerprogramm, umfassend Befehle, die bewirken, dass das Logistiksicherheitssystem gemäß dem zweiten Aspekt der Erfindung das Verfahren gemäß dem ersten Aspekt der Erfindung ausführt, wenn das Computerprogramm auf eine Recheneinheit ausgeführt wird. Es soll verstanden werden, dass das Computerprogramm auch in Teilen auf verschiedenen Recheneinheiten, insbesondere den Fahrzeug-Verarbeitungseinheiten, der Kontroll-Verarbeitungseinheit und/oder einer Freigabe-Verarbeitungseinheit, ausgeführt werden kann.

Weiterhin soll verstanden werden, dass das Verfahren zum Sichern eines Logistikbereichs gemäß einem dem ersten Aspekt der Erfindung, das Logistiksicherheitssystem gemäß dem zweiten Aspekt der Erfindung und das Computerprogrammprodukt gemäß dem vierten Aspekt der Erfindung, gleiche und ähnliche Unteraspekte haben, wie sie insbesondere in den abhängigen Ansprüchen niedergelegt sind, sodass auch für die weiteren bevorzugten Ausführungsformen des Logistiksicherheitssystems und des Computerprogramms vollumfänglich auf die obige Beschreibung Bezug genommen wird.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen.

Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung der bevorzugten Ausführungsformen sowie anhand der Zeichnungen. Diese zeigen in:
- Figur 1a: eine schematische Draufsicht auf einen Logistikbereich mit einem Logistiksicherheitssystem gemäß einem ersten Ausführungsbeispiel;
- Figur 1b: eine schematische Draufsicht auf den Logistikbereich gemäß dem ersten Ausführungsbeispiel, wobei das erste Fahrzeug eine zur Figur 1a veränderte Position aufweist;
- Figur 1c: eine schematische Draufsicht auf den Logistikbereich gemäß dem ersten Ausführungsbeispiel, wobei das erste Fahrzeug eine zu den Figuren 1a und 1b veränderte Position aufweist;
- Figur 1d: eine schematische Draufsicht auf den Logistikbereich gemäß dem ersten Ausführungsbeispiel, wobei das erste Fahrzeug in einer Freigabezone angeordnet ist;
- Figur 2a: eine schematische Darstellung, die Schritte eines ersten bevorzugten Ausführungsbeispiels des erfindungsgemäßen Verfahrens repräsentiert, die durchgeführt werden, wenn sich das Fahrzeug, wie in den Figuren 1a bis 1d gezeigt, bewegt;
- Figur 2b: eine schematische Darstellung, die weitere Schritte des ersten bevorzugten Ausführungsbeispiels des erfindungsgemäßen Verfahrens darstellt;
- Figur 3a: eine schematische Draufsicht auf einen Logistikbereich mit einem Logistiksicherheitssystem gemäß einem zweiten Ausführungsbeispiel mit drei Fahrzeugen;
- Figur 3b: eine schematische Draufsicht auf einen Logistikbereich mit dem Logistiksicherheitssystem gemäß dem zweiten Ausführungsbeispiel, wobei die Fahrzeuge veränderte Positionen aufweisen;
- Figur 4: eine schematische Darstellung, die Schritte eines zweiten bevorzugten Ausführungsbeispiels des erfindungsgemäßen Verfahrens darstellt, die in der in den Figuren 3a und 3b dargestellten Situation durchgeführt werden;
- Figur 5a: eine schematische Draufsicht auf einen Logistikbereich mit einem Logistiksicherheitssystem gemäß einem dritten Ausführungsbeispiel, wobei die Kontrollzonen gegenüber dem ersten Ausführungsbeispiel verschieden definiert sind;
- Figur 5b: eine schematische Draufsicht auf einen Logistikbereich mit einem Logistiksicherheitssystem gemäß dem dritten Ausführungsbeispiel, wobei zwei Tore des Logistikbereichs verschlossen sind;
- Figur 6: eine schematische Darstellung eines ersten Fahrzeugs, das eine Ladung transportiert;
- Figur 7: in schematischer Weise den Aufbau eines Fahrzeugmoduls, eines Kontrollmoduls und eines Freigabemoduls; und in
- Figur 8: in schematischer Weise die Kommunikation zwischen einem ersten Fahrzeugmodul und einem zweiten Fahrzeugmodul.

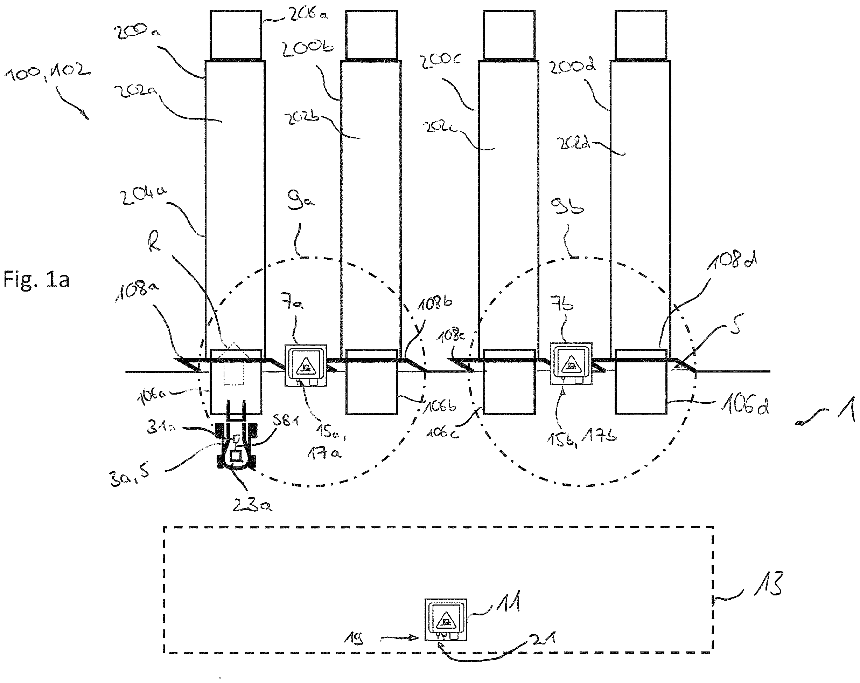

Figur 1a zeigt ein Logistiksicherheitssystem 1 zum Sichern eines Logistikbereichs 100, der gemäß diesem Ausführungsbeispiel eine Ladezone 102 ist. Die Ladezone 102 umfasst hier vier Stellplätze für Transportfahrzeuge 200a, 200b, 200c, 200d, wobei sich der Logistikbereich 100 in etwa auf Höhe der Ladeflächen 202a, 202b, 202c, 202d der Transportfahrzeuge 200a, 200b, 200c, 200d befindet. Um einen Spalt S zwischen den Ladeflächen 202a, 202b, 202c, 202d der Transportfahrzeuge 200a, 200b, 200c, 200d und der Ladezone 102 zu überbrücken, weist die Ladezone 102 vier Laderampen 106a, 106b, 106c, 106d auf. Diese Laderampen 106a, 106b, 106c, 106d, können auf die Ladeflächen 202a, 202b, 202c, 202d aufgelegt werden und ermöglichen einem ersten Fahrzeug 3a, das hier ein Gabelstapler 5 ist, auf die Ladeflächen 202a, 202b, 202c, 202d aufzufahren. Wie die mittels eines Pfeils angedeutete Fahrtrichtung R des ersten Fahrzeugs 3a verdeutlicht, fährt das erste Fahrzeug 3a auf die Ladefläche 202a des ersten Transportfahrzeugs 200a auf und durchfährt dabei ein Tor 108a. Auch die übrigen Stellplätze weisen Tore 108a, 108b, 108c, 108d auf. Um ein Herabstürzen von Fahrzeugen 3a zu vermeiden, werden die Tore 108a, 108b, 108c, 108d vorzugsweise geschlossen, wenn kein Transportfahrzeug 200a, 200b, 200c, 200d be- und/oder entladen wird.

Ein erstes Kontrollmodul 7a des Logistiksicherheitssystems 1 definiert eine erste Kontrollzone 9a. Das erste Kontrollmodul 7a ist hier in fester Relation zwischen dem ersten Tor 108a und dem zweiten Tor 108b angeordnet, wobei die erste Kontrollzone 7a die beiden Tore 108a, 108b bzw. Übergangsbereiche zwischen den Laderampen 106a, 106b, 106c, 106d und den Ladeflächen 200a, 200b, 200c, 200d abdeckt. Es kann auch vorgesehen sein, dass die erste Kontrollzone 9a nur das erste Tor 108a oder einen Übergang zwischen der Laderampe 106a und der ersten Ladefläche 202a abdeckt.

In analoger Weise ist ein zweites Kontrollmodul 7b des Logistiksicherheitssystems 1 zwischen dem dritten Tor 108c und dem vierten Tor 108d angeordnet und definiert eine zweite Kontrollzone 9b. In diesem Ausführungsbeispiel sind die erste Kontrollzone 9a und die zweite Kontrollzone 9b in einer vertikalen Projektion kreisförmig ausgebildet. Es kann jedoch ebenso vorgesehen sein, dass die Kontrollzonen in einer vertikalen Projektion quadratisch, rechteckig, elliptisch, trapezförmig, dreieckig und/oder polygonal ausgebildet sind. Ferner kann eine Form der ersten Kontrollzone 9a von einer Form der zweiten Kontrollzone 9b abweichen. Vorzugsweise sind alle Kontrollzonen 9a, 9b des Logistiksicherheitssystems 1 identisch ausgebildet. Ferner soll verstanden werden, dass das Logistiksicherheitssystem 1 auch nur eine Kontrollzone 9a, 9b aufweisen kann. Beispielsweise könnte die erste Kontrollzone 9a alle Tore 108a, 108b, 108c, 108d abdecken.

Ein Freigabemodul 11 ist beabstandet zu den Kontrollmodulen 7a, 7b angeordnet und definiert eine Freigabezone 13. Die Freigabezone 13 ist hier im Wesentlichen rechteckig ausgebildet, wobei diese analog zu den Kontrollzone 9a, 9b auch kreisförmig, elliptisch, dreieckig, quadratisch, polygonal oder trapezförmig sein kann. Ferner kann auch vorgesehen sein, dass die Freigabezone 13 die erste Kontrollzone 9a und/oder die zweite Kontrollzone 9b berührt bzw. unmittelbar mit diesen abschließt. Das erste Kontrollmodul 7a weist eine erste Kontroll-Antenneneinheit 15a mit einer ersten Kontroll-Antenne 17a auf. In analoger Weise weist auch die zweite Kontrolleinheit 7b eine zweite Kontroll-Antenneneinheit 15b mit einer zweiten Kontroll-Antenne 17b auf. Vorzugsweise weisen die Kontroll-Antenneneinheit 15a, 15b der Kontrollmodule 7a, 7b mehrere Kontroll-Antennen 17aa, 17ab, 17ba, 17bb auf, die besonders bevorzugt in einer festen räumlichen Beziehung zueinander montiert sind. Auch das Freigabemodul 11 weist eine Antenneneinheit auf, die als Freigabe-Antenneneinheit 19 bezeichnet wird. Die Freigabe-Antenneneinheit 19 hat in diesem Ausführungsbeispiel zwei Freigabe-Antennen 21.

Das erste Kontrollmodul 7a und das zweite Kontrollmodul 7b sind dazu ausgebildet, mittels der Kontroll-Antenneneinheit 15a, 15b jeweils ein dreidimensionales elektromagnetisches Feld zu erzeugen (nicht dargestellt). Ferner sind die Kontrolleinheiten 7a, 7b dazu ausgebildet die Kontrollzone 9a, 9b zu definieren, die ein Teilbereich des von der jeweiligen Kontrolleinheit 7a, 7b erzeugten dreidimensionalen elektromagnetischen Felds sind. Es soll verstanden werden, dass eine Reichweite der Kontroll-Antennen 17aa, 17ab, 17ba, 17bb und somit auch eine Größe der erzeugten elektromagnetischen Felder vorzugsweise größer ist, als der von den Kontrollzone 9a, 9b abgedeckte Bereich. Auch das Freigabemodul 11 ist dazu ausgebildet, mittels der Freigabe-Antennen 21 der Freigabe-Antenneneinheit 19 ein dreidimensionales elektromagnetisches Feld zu erzeugen, wobei das Freigabemodul 11 in analoger Weise die Freigabezone 13 als Teilbereich dieses nicht dargestellten elektromagnetischen Feldes definiert.

Auf dem Fahrzeug 3a ist ein erstes Fahrzeugmodul 23a montiert, dessen Aufbau an späterer Stelle erläutert wird. Das Fahrzeugmodul 23a ist auf die Kontroll-Antenneneinheit 15a, 15b und die Freigabe-Antenneneinheit 19 abgestimmt. Beispielsweise können Funkfrequenzbereiche des Fahrzeugmoduls 23a und der Kontroll-Antenneneinheit 15a, 15b aufeinander abgestimmt sein. Fährt das erste Fahrzeug 3a in die erste Kontrollzone 9a ein, tritt auch das darauf montierte erste Fahrzeugmodul 23a in die Kontrollzone 9a ein. Hier sind sowohl das Kontrollmodul 7a als auch das erste Fahrzeugmodul 23a zum Erkennen, ob sich das erste Fahrzeug 3a in der ersten Kontrollzone 9a befindet, ausgebildet. Es kann jedoch auch vorgesehen sein, dass das Erkennen, ob sich das erste Fahrzeug 3a in der ersten Kontrollzone 9a befindet, nur durch das erste Fahrzeugmodul 23a oder nur durch das erste Kontrollmodul 7a durchgeführt wird. In analoger Weise ist hier auch das zweite Kontrollmodul 7b dazu ausgebildet, zu erkennen, ob sich das erste Fahrzeugmodul 23a In der zweiten Kontrollzone 9b befindet.

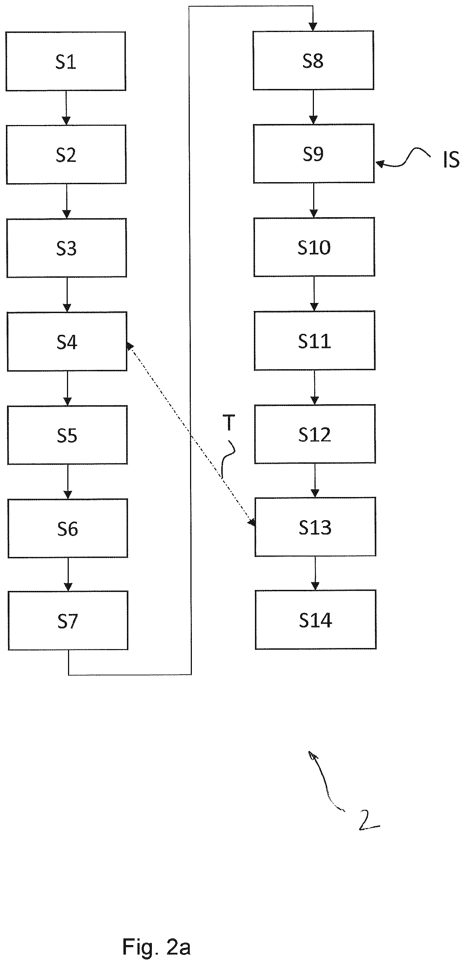

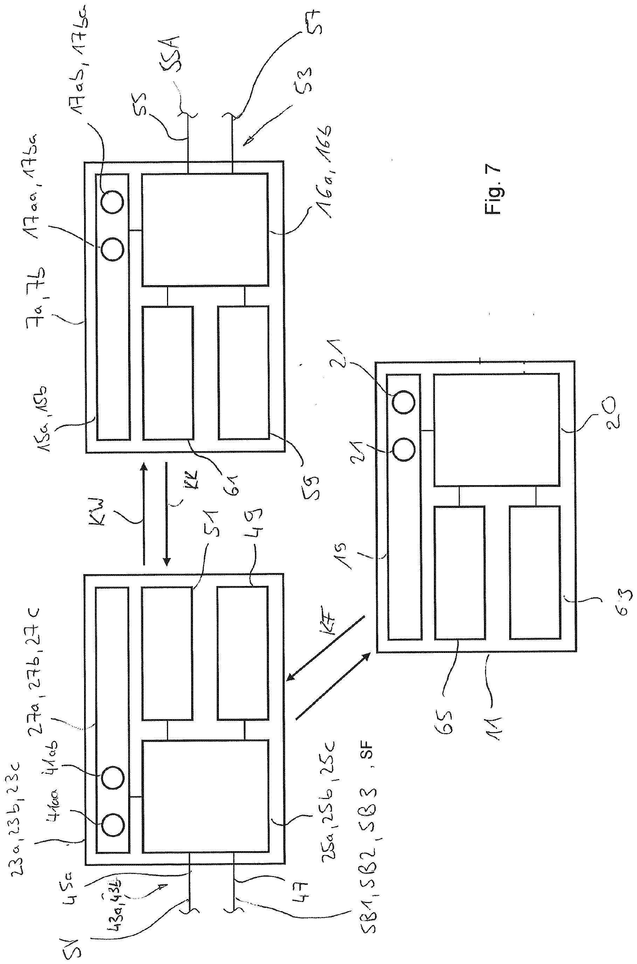

Bezugnehmend auf Figur 2a werden Schritte einer bevorzugten Ausführungsform des Verfahrens 2 erläutert, die durchgeführt werden, bis ermittelt ist, ob sich das erste Fahrzeug 3a in der ersten Kontrollzone 9a befindet. In einem ersten Schritt S1 erzeugt das erste Kontrollmodul 7a mittels der ersten Kontroll-Antenneneinheit 15a ein dreidimensionales elektromagnetisches Feld und erhält dieses aufrecht. In einem zweiten Schritt S2 definiert eine Kontroll-Verarbeitungseinheit 16a (Figur 7) des ersten Kontrollmoduls 7a die erste Kontrollzone 9a, die ein Teilbereich des von der ersten Kontroll-Antenneneinheit 15a erzeugten dreidimensionalen elektromagnetischen Felds ist. Anschließend überwacht das erste Kontrollmodul 7a die erste Kontrollzone 9a (Schritt S3). Wenn nun das auf die Kontroll-Antenneneinheit 15a abgestimmte erste Fahrzeugmodul 23a in die erste Kontrollzone 9a eintritt (Schritt S4), wird dies in einem fünften Schritt S5 durch die erste Kontroll-Verarbeitungseinheit 16a des ersten Kontrollmoduls 7a ermittelt. In einem sechsten Schritt S6 sendet das Kontrollmodul 7a unter Verwendung der Kontroll-Antenneneinheit 15a eine Konfiguration KK1 der ersten Kontrollzone 9a an das erste Fahrzeugmodul 23a. Diese Konfiguration KK1 der ersten Kontrollzone 9a empfängt das erste Fahrzeugmodul 23a mittels einer ersten Fahrzeug-Antenneneinheit 27a (Figur 7), die wiederum mit einer ersten Fahrzeug-Verarbeitungseinheit 25a verbunden ist (Schritt S7). Mittels der empfangenen Konfiguration KK1 der ersten Kontrollzone 9a ermittelt die erste Fahrzeug-Verarbeitungseinheit 25a daraufhin, dass sich das erste Fahrzeug 3a innerhalb der ersten Kontrollzone 9a befindet (Schritt S8). In einem neunten Schritt S9 setzt die erste Fahrzeug-Verarbeitungseinheit 25a in Antwort auf dieses Ermitteln einen Sicherheit-Statusindikator IS in der ersten Fahrzeug-Verarbeitungseinheit 25a. In diesem Ausführungsbeispiel ist die erste Fahrzeug-Verarbeitungseinheit 25a mit einer Steuerung 31a (Steuerung 31a ist nicht in allen Figuren dargestellt) des ersten Fahrzeugs 3a verbunden, so dass die erste Fahrzeug-Verarbeitungseinheit 25a ein erstes Beschränkungssignal SB1 an der Steuerung 31a bereitstellt (Schritt S10). Wird das erste Beschränkungssignal SB1 an der Steuerung 31a bereitgestellt, beschränkt diese einen oder mehrere oder alle Bewegungsfreiheitsgrad des ersten Fahrzeugs 3a (Schritt S11).

Vorzugsweise weist das erste Fahrzeugmodul 23a eine Ausgabeeinheit 51 auf (Figur 7), die zum Ausgeben eines Warnsignals ausgebildet ist, wenn ermittelt wird, dass sich das erste Fahrzeug 3a innerhalb der Kontrollzone 9a befindet. In diesem Ausführungsbeispiel wird beim Bereitstellen des Beschränkungssignals SB1 eine Höchstgeschwindigkeit des Fahrzeugs 3a reduziert. Eine maximale Geschwindigkeit des ersten Fahrzeugs 3a beim Befahren der ersten Laderampe 106a wird reduziert, wodurch Schäden an dem ersten Fahrzeug 3a verhindert werden. Ferner können Kollisionen des ersten Fahrzeugs 3a mit dem ersten Tor 108a und/oder einer Seitenwand 204a des ersten Transportfahrzeugs 200a vermieden werden.

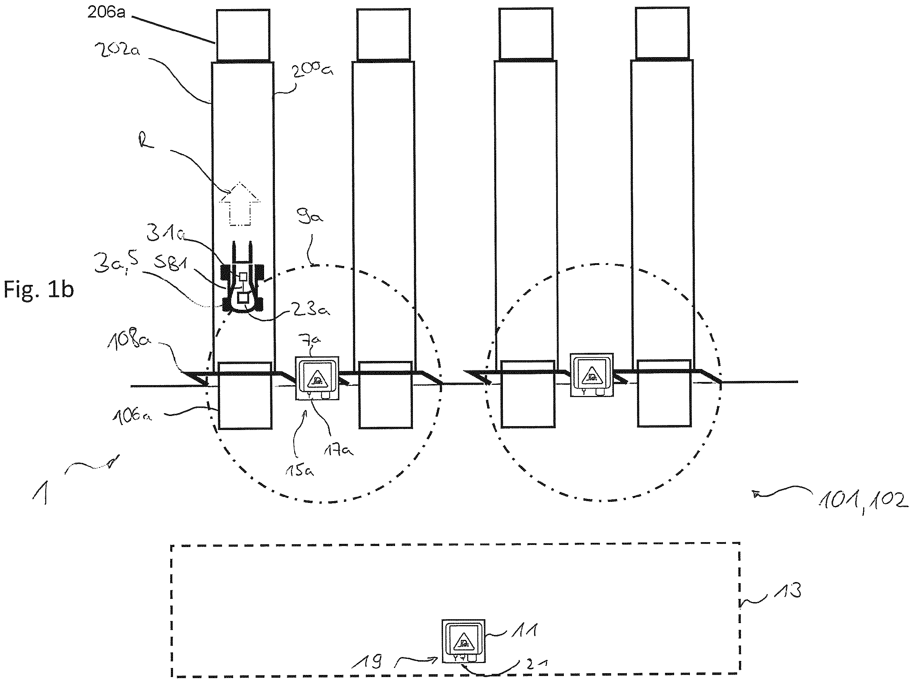

Gemäß Figur 1b ist das erste Fahrzeug 3a auf der ersten Ladefläche 202a des ersten Transportfahrzeugs 200a angeordnet, und verlässt die erste Kontrollzone 9a in Fahrtrichtung R. Das Fahrzeug bewegt sich also auf ein Führerhaus 206a des ersten Fahrzeugs 3a zu. Basierend auf der in Schritt S7 empfangenen Konfiguration KK1 der ersten Kontrollzone 9a ermittelt die erste Fahrzeug-Verarbeitungseinheit 25a, dass das erste Fahrzeug 3a bzw. das erste Fahrzeugmodul 23a die erste Kontrollzone 9a verlässt. Auch wenn das erste Fahrzeugmodul 23a die Kontrollzone 9a verlässt, wird der Sicherheit-Statusindikator IS in der ersten Fahrzeug-Verarbeitungseinheit 25a des ersten Fahrzeugmoduls 23a beibehalten. In diesem Ausführungsbeispiel wird somit erreicht, dass eine Höchstgeschwindigkeit des ersten Fahrzeugs 3a auch dann beschränkt ist, wenn sich das Fahrzeug 3a nicht in der ersten Kontrollzone 9a befindet. Die erste Kontrollzone 9a kann somit auch nur einen Teilbereich der ersten Ladefläche 202a abdecken, wodurch in vorteilhafter Weise erreicht wird, dass ein zu überwachender Bereich beschränkt ist, ohne die mit dem Logistiksicherheitssystem 1 erreichbare Sicherungswirkung zu reduzieren.

Vorzugsweise stellt die erste Fahrzeug-Verarbeitungseinheit 25a des ersten Fahrzeugmoduls 23a an der Steuerung 31a des ersten Fahrzeugs 3a ein Beschränkungssignal SB1 derart bereit, dass eine maximale Hubhöhe eines Hubmastes (nicht dargestellt) des Gabelstaplers 5 beschränkt ist. Dadurch kann vermieden werden, dass ein über der Ladefläche 202a angeordnetes Dach (nicht dargestellt) oder eine die Ladefläche 202a abdeckende Plane (nicht dargestellt) durch den Hubmast des Gabelstaplers 5 beschädigt wird. Ferner kann eine Kollision zwischen dem Hubmast und dem ersten Tor 108a vermieden werden. In Figur 2a wird das Beibehalten des Sicherheit-Statusindikators IS in der Fahrzeug-Verarbeitungseinheit 25a, wenn das erste Fahrzeugmodul 23a die erste Kontrollzone 9a verlässt, durch den Schritt S12 repräsentiert.

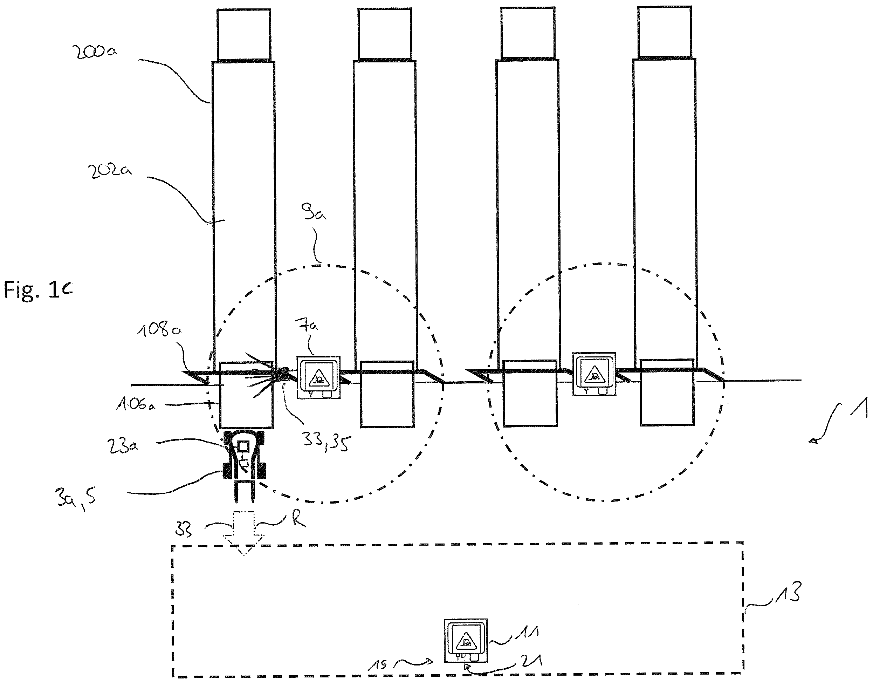

Figur 1c illustriert, dass der Sicherheit-Statusindikator IS auch dann in der ersten Fahrzeug-Verarbeitungseinheit 25a des ersten Fahrzeugmodul 23a beibehalten wird, wenn das erste Fahrzeug 3a erneut in die erste Kontrollzone 9a eintritt (Schritt S13). In diesem Ausführungsbeispiel ist das erste Kontrollmodul 7a dazu ausgebildet, zu ermitteln, ob das erste Fahrzeugmodul 23a innerhalb eines vordefinierten Zeitraums T zum zweiten Mal in die erste Kontrollzone 9a eintritt. In Antwort auf ein solches Ermittelt, dass das erste Fahrzeugmodul 23a innerhalb des vordefinierten Zeitraums T zum zweiten Mal in die erste Kontrollzone 9a eintritt (Schritt es 13), löst das erste Kontrollmodul 7a eine mit dem ersten Kontrollmodul 7a verbundene Erfassungseinrichtung 33 aus (Schritt S14), die hier als Kamera 35 ausgebildet ist (Nur in Figur 1c dargestellt). Wird die Kamera 35 ausgelöst, nimmt diese ein Bild des ersten Fahrzeugs 3a und der von diesem ersten Fahrzeug 3a transportierten Ladung (nicht dargestellt) auf. Mittels des Bilds kann dann ermittelt werden, ob die Ladung beim Entladen von der Ladefläche 202a auf die Ladezone 102 beschädigt ist. Es kann auch vorgesehen sein, dass das erste Kontrollmodul 7a dazu ausgebildet ist, die Erfassungseinrichtung 33 auszulösen, wenn das erste Fahrzeugmodul 23a sich zum ersten Mal innerhalb eines vordefinierten Zeitraums T in der ersten Kontrollzone 9a befindet. Dies ist insbesondere dann wünschenswert, wenn nach einer Logistikabwicklung ermittelt werden soll, ob Transportgut bereits beim Verladen auf ein Transportfahrzeug 200a, 200b, 200c, 200d beschädigt war. Das Berücksichtigen des vordefinierten Zeitraums ist dann insbesondere deshalb wünschenswert, da das erste Fahrzeug 3a die erste Kontrollzone 9a typischerweise mehrmals täglich durchfährt.

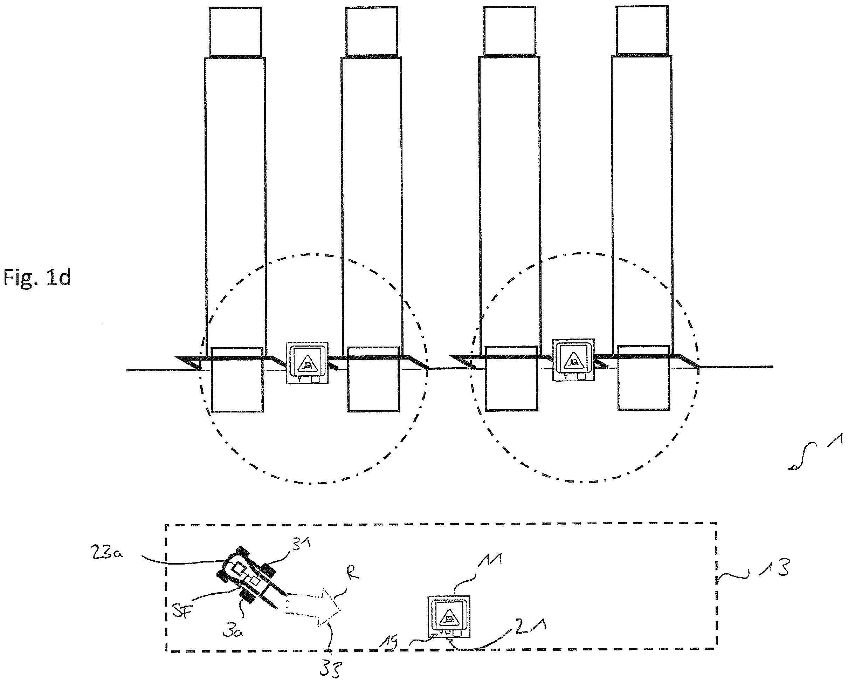

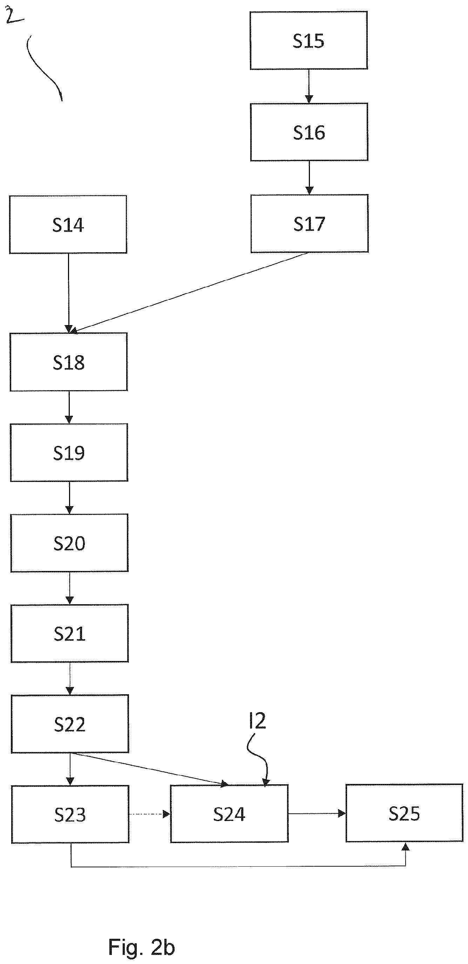

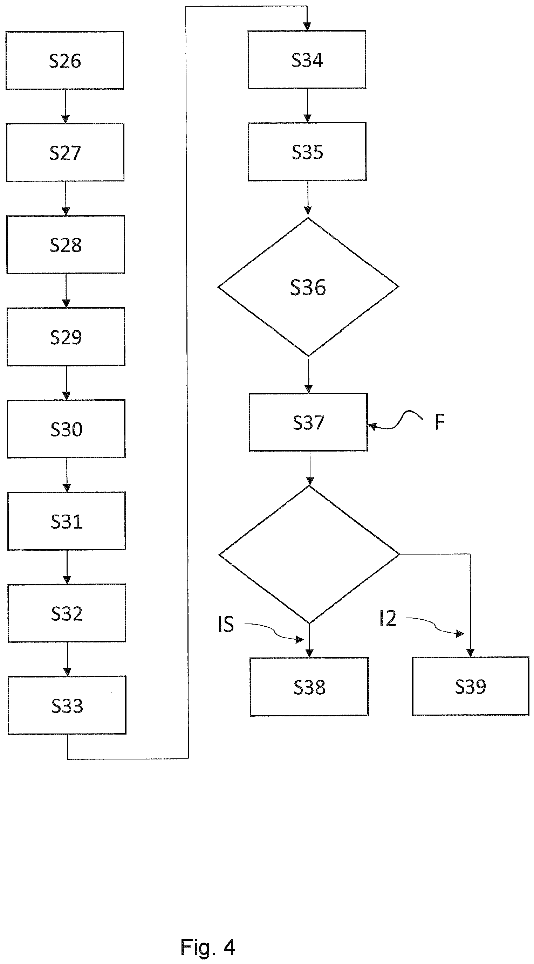

Gemäß Figur 1d ist das erste Fahrzeug 3a in die Freigabezone 13 eingefahren, die von dem Freigabemodul 11 überwacht wird. Wenn ermittelt wird, dass sich das erste Fahrzeugmodul 23a innerhalb der Freigabezone 13 befindet, wird der erste Sicherheit-Statusindikator IS aus der Fahrzeug-Verarbeitungseinheit 25a gelöscht. Der die Fahrtrichtung R illustrierende Pfeil 33 ist in Figur 1d länger, als in den Figuren 1a bis 1c, wodurch die nun nicht mehr beschränkte Höchstgeschwindigkeit des ersten Fahrzeugs 3a repräsentiert wird. Figur 2b illustriert den Ablauf der bevorzugten Ausführungsform des Verfahrens 2 beim Einfahren des Fahrzeugs 3a in die Freigabezone 11, wobei von den vorhergehenden Schritten S11 bis S14 in Figur 4 nur der Schritt S14 dargestellt ist. In einem fünfzehnten Schritt S15 erzeugt das Freigabemodul 11 mittels der Freigabe-Antenneneinheit 19 ein dreidimensionales elektromagnetisches Feld (nicht dargestellt). Anschließend definiert eine Freigabe-Verarbeitungseinheit 35 des Freigabemoduls 11 die Freigabezone 13, die ein Teilbereich des von der Freigabe-Antenneneinheit 19 erzeugten dreidimensionalen elektromagnetischen Felds ist (Schritt S16). Es soll verstanden werden, dass die Freigabezone 13 vorzugsweise kleiner ist, als ein eine gesamte Reichweite der Freigabe-Antennen 21.

Das Freigabemodul 11 überwacht in einem siebzehnten Schritt S17 des Verfahrens 2 die Freigabezone 13. Fährt nun das erste Fahrzeug 3a, auf dem das erste Fahrzeugmodul 23a montiert ist, in einem achtzehnten Schritt S18 in die Freigabezone 13 ein, so wird dies in einem neunzehnten Schritt S19 von der Freigabe-Verarbeitungseinheit 35 des Freigabemoduls 11 ermittelt. In Antwort auf das Ermitteln, dass sich das auf die Freigabe-Verarbeitungseinheit 19 abgestimmte erste Fahrzeugmodul 23a in der Freigabezone 13 befindet, sendet das Freigabemodul 11 eine Konfiguration der Freigabezone 13 an das erste Fahrzeugmodul 23a (Schritt S20). Wenn das erste Fahrzeugmodul 23a die Konfiguration der Freigabezone 13 (Schritt S21) empfängt, ermittelt die erste Fahrzeug-Verarbeitungseinheit 25a des ersten Fahrzeugmoduls 23a, dass sich das erste Fahrzeug 3a in der Freigabezone 13 befindet (Schritt S22). Daraufhin wird der Sicherheit-Statusindikator IS In einem dreiundzwanzigsten Schritt S23 aus der ersten Fahrzeug-Verarbeitungseinheit 25a gelöscht. Wie die Verzweigung in Figur 2b verdeutlicht, kann alternativ oder ergänzend in einem vierundzwanzigsten Schritt S24 ein zweiter Statusindikator I2 in der ersten Fahrzeug-Verarbeitungseinheit 25a gesetzt werden, wenn ermittelt wird, dass sich das erste Fahrzeugmodul 23a innerhalb der Freigabezone 13 befindet. Wird der Sicherheit-Statusindikator IS gelöscht oder durch einen zweiten Statusindikator I2 ersetzt, stellt die erste Fahrzeug-Verarbeitungseinheit 25a ein Freigabesignal SF an der Steuerung 31a des ersten Fahrzeugs 3a bereit (Schritt S25). Vorzugsweise wird somit eine Beschränkung des Bewegungsfreiheitsgrades des Fahrzeugs 3a, die hier einer Beschränkung der Höchstgeschwindigkeit des Fahrzeugs 3a entspricht, aufgehoben. Es kann jedoch vorgesehen sein, dass eine Beschränkung des Bewegungsfreiheitsgrades des ersten Fahrzeugs 3a nur teilweise aufgehoben wird und/oder, dass eine Beschränkung eines ersten Bewegungsfreiheitsgrades aufgehoben wird, während eine Beschränkung eines zweiten Bewegungsfreiheitsgrades des ersten Fahrzeugs 3a beibehalten wird. Beispielsweise kann eine Höchstgeschwindigkeit des Fahrzeugs 3a beim Setzen des zweiten Statusindikators I2 erhöht werden, wobei eine maximale Beschleunigung des ersten Fahrzeugs 3a beschränkt bleibt. Eine weitere Beschränkung des zumindest einen Bewegungsfreiheitsgrades des Fahrzeugs 3a erfolgt bevorzugt dann, wenn der zweite Statusindikator I2 in der ersten Fahrzeug-Verarbeitungseinheit 25a gesetzt ist. Wie Figur 2b zeigt, werden die Schritte S15 bis S17 vorzugsweise parallel zu den Schritten S1 bis S14 durchgeführt. Es soll somit verdeutlicht werden, dass die Freigabezone 13 und die Kontrollzone 9a, 9b vorzugsweise simultan überwacht werden.

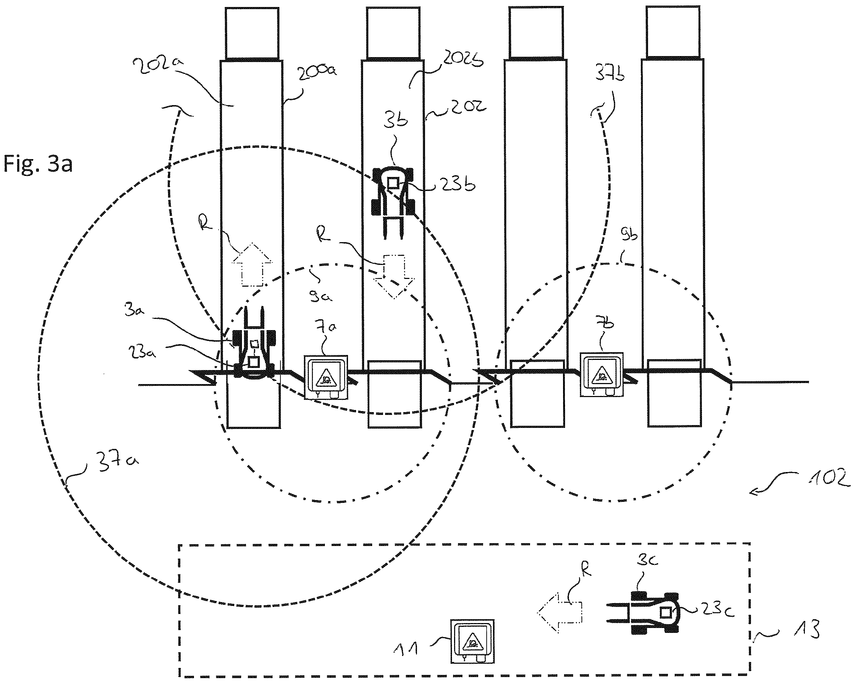

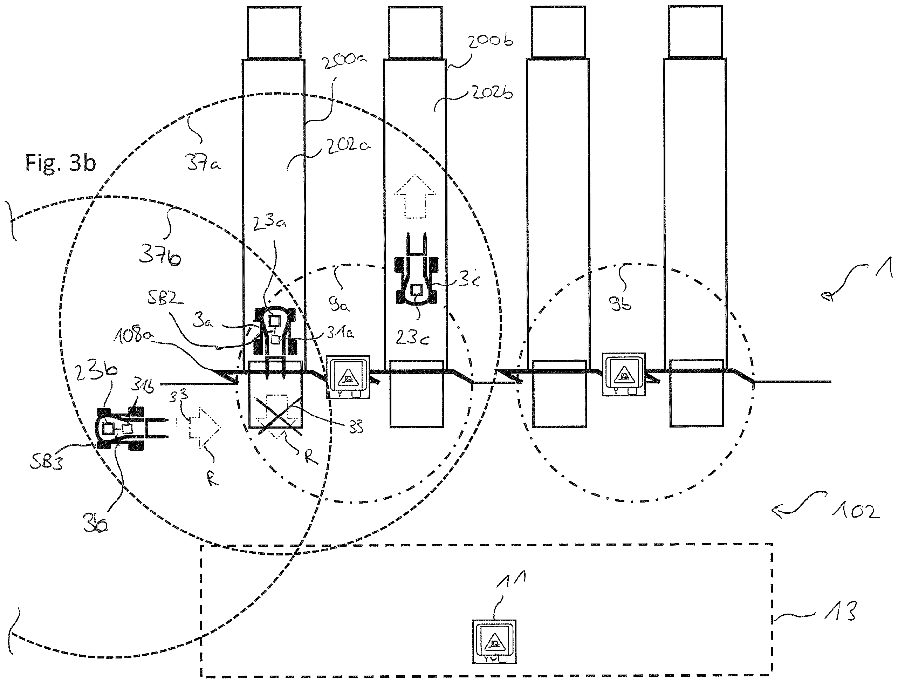

In einem zweiten Ausführungsbeispiel sind in dem Logistikbereich 100 neben dem ersten Fahrzeug 3a auch ein zweites Fahrzeug 3b und ein drittes Fahrzeug 3c dargestellt. Die Anordnung der Kontrollmodule 7a, 7b, des Freigabemoduls 11, der Kontrollzonen 9a, 9b und der Freigabezone 13 ist in den Figuren 3a, 3b analog zu der in den Figuren 1a bis 1d dargestellten Anordnung. Analog zu dem ersten Fahrzeug 3a weist das zweite Fahrzeug 3b eine zweites Fahrzeugmodul 23b und das dritte Fahrzeug 3c eine drittes Fahrzeugmodul 23c auf. Vorzugsweise sind das erste Fahrzeugmodul 23a, das zweite Fahrzeugmodul 23b und das dritte Fahrzeugmodul 23c identisch ausgebildet. Das erst Fahrzeugmodul 23a weist eine erste Fahrzeug-Antenneneinheit 27a auf, die dazu ausgebildet ist, ein dreidimensionales elektromagnetisches Feld (nicht dargestellt) zu erzeugen. Die erste Fahrzeug-Verarbeitungseinheit 25a ist dazu ausgebildet, eine erste Fahrzeugwarnzone 37a zu definieren, die ein Teilbereich des von der ersten Fahrzeug-Antenneneinheit 27a erzeugten dreidimensionalen elektromagnetischen Feldes ist. Hier ist die erste Fahrzeugwarnzone 37a in einer senkrechten Projektion kreisförmig ausgebildet.

Es kann jedoch auch vorgesehen sein, dass die erste Fahrzeugwarnzone quadratisch, rechteckig, trapezförmig, dreieckig, elliptisch oder polygonal ausgebildet ist. Ferner kann vorgesehen sein, dass die erste Fahrzeugwarnzone 37a mehrere Teilbereiche aufweist, die vorzugsweise nicht überlappen und/oder beabstandet zueinander ausgebildet sind. Beispielsweise kann sich ein erster Teilbereich der ersten Fahrzeugwarnzone 37a in Fahrtrichtung R von dem ersten Fahrzeug 3a erstrecken, und ein zweiter Teilbereich der ersten Fahrzeugwarnzone 37a sich entgegen der Fahrtrichtung R von einem Heck 39 des ersten Fahrzeugs 3a erstrecken. Dabei ist der zweite Teilbereich vorzugsweise kleiner als der erste Teilbereich. Es soll verstanden werden, dass auch das zweite Fahrzeugmodul 23b und das dritte Fahrzeugmodul 23c zum Erzeugen von zweiten und dritten Fahrzeugwarnzonen ausgebildet sind, wobei die zweite Fahrzeugwarnzone 37b nur in einem Teil der Figuren dargestellt ist und die dritte Fahrzeugwarnzone aus Darstellungsgründen nicht dargestellt ist. Das auf dem zweiten Fahrzeug 3b montierte zweite Fahrzeugmodul 23b tritt in Figur 3a gerade in die erste Fahrzeugwarnzone 37 ein.

Figur 4 illustriert Schritte einer bevorzugten Ausführungsform des Verfahrens 2, die vorzugsweise konsekutiv oder parallel zu den zuvor beschriebenen Schritten S1 bis S25 durchgeführt werden. In einem sechsundzwanzigsten Schritt S26 erzeugt das erste Fahrzeugmodul 23a mittels der ersten Fahrzeug-Antenneneinheit 27a ein dreidimensionales elektromagnetisches Feld, wobei die erste Fahrzeug-Verarbeitungseinheit 25a dann die erste Fahrzeugwarnzone 37a definiert. Die erste Fahrzeugwarnzone 37a ist dabei ein Teilbereich des von der ersten Fahrzeug-Antenneneinheit 27a erzeugten dreidimensionalen elektromagnetischen Feldes (Schritt S27). Daraufhin überwacht die erste Fahrzeug-Verarbeitungseinheit 25a die erste Fahrzeugwarnzone 37a (Schritt S28). Tritt das auf die erste Fahrzeug-Antenneneinheit 27 abgestimmte zweite Fahrzeugmodul 23b in die erste Fahrzeugwarnzone 37 ein (Schritt S29), wird dieses von der ersten Fahrzeug-Verarbeitungseinheit 25a ermittelt (Schritt S30). In Antwort auf das Ermitteln sendet das erste Fahrzeugmodul 23a unter Verwendung der ersten Fahrzeug-Antenneneinheit 27a die Konfiguration KW1 der ersten Fahrzeugwarnzone 37a an das zweite Fahrzeugmodul 23b (Schritt S31).

Das zweite Fahrzeugmodul 23b empfängt mittels einer zweiten Fahrzeug-Verarbeitungseinheit 25b die von dem ersten Fahrzeugmodul 23a gesendete Konfiguration KW1 der ersten Fahrzeugwarnzone 37a (Schritt S32) und ermittelt, dass sich das zweite Fahrzeugmodul 23b innerhalb der ersten Fahrzeugwarnzone 37a befindet (Schritt S33). Wird ermittelt, dass sich das zweite Fahrzeugmodul 23b innerhalb der ersten Fahrzeugwarnzone 37a befindet, sendet das zweite Fahrzeugmodul 23b einen in der zweiten Fahrzeug-Verarbeitungseinheit 25b des zweiten Fahrzeugmodul 23b gesetzten Statusindikator I an das erste Fahrzeugmodul 23a (Schritt S S34). Das erste Fahrzeugmodul 23a empfängt mittels der ersten Fahrzeug-Antenneneinheit 27a den in der zweiten Fahrzeug-Verarbeitungseinheit 25b des zweiten Fahrzeugmoduls 23b gesetzten Statusindikator I (Schritt S35) und vergleicht mittels der ersten Fahrzeug-Verarbeitungseinheit 25a in einem sechsunddreißigsten Schritt S36 die Statusindikatoren I, die in der ersten Fahrzeug-Verarbeitungseinheit 25a und der zweiten Fahrzeug-Verarbeitungseinheit 25b gesetzt sind. Es soll verstanden werden, dass auch das zweite Fahrzeugmodul 23b eine zweite Fahrzeugwarnzone 37b definieren kann und vorzugsweise die Schritte S26 bis S36 des Verfahrens 2 simultan zu dem ersten Fahrzeugmodul 23a ausführt.

Wie Figur 3a zeigt, fährt das erste Fahrzeug 3a auf die erste Ladefläche 202a des ersten Transportfahrzeugs 200a auf und durchquert dabei die erste Kontrollzone 9a, sodass in der ersten Fahrzeug-Verarbeitungseinheit 25a der Sicherheit-Statusindikator IS gesetzt ist. Das zweite Fahrzeug 3b befindet sich auf der Ladefläche 202b des zweiten Transportfahrzeugs 200b und hat hierfür die erste Kontrollzone 9a durchquert. Bei diesem Durchqueren wurde auch in der zweiten Fahrzeug-Verarbeitungseinheit 25b des zweiten Fahrzeugmoduls 23b der Sicherheit-Statusindikator IS gesetzt. Ferner wurde der Sicherheits-Statusindikator IS in der zweiten Fahrzeug-Verarbeitungseinheit 25b beibehalten, als das zweite Fahrzeug 3b die erste Kontrollzone 9a verlassen hat. Der Sicherheits-Statusindikator IS ist also sowohl in der ersten Fahrzeug-Verarbeitungseinheit 25a als auch in der zweiten Fahrzeug-Verarbeitungseinheit 25b gesetzt.

In der in Figur 3a dargestellten Situation ergibt der Vergleich der Statusindikatoren (Schritt S36) demnach, dass der in der ersten Fahrzeug-Verarbeitungseinheit 25a gesetzte Statusindikator IS mit dem in der zweiten Fahrzeug-Verarbeitungseinheit 25b gesetzten Statusindikator IS übereinstimmt, wobei in diesem Ausführungsbeispiel keine Folgeoperation F durchgeführt wird, wenn die Statusindikatoren I der ersten Fahrzeug-Verarbeitungseinheit 25a und der zweiten Fahrzeug-Verarbeitungseinheit 25b übereinstimmen.

Das dritte Fahrzeugmodul 23c ist nicht innerhalb der ersten Fahrzeugwarnzone 7a oder der zweiten Fahrzeugwarnzone 7a angeordnet, so dass hier keine weiteren Schritte erfolgen und das Überwachen (Schritt S28) fortgesetzt wird.

Figur 3b zeigt eine zu Figur 3a verschiedene Anordnung der ersten, zweiten und dritten Fahrzeuge 3a, 3b, 3c in dem Logistikbereich 100. Das erste Fahrzeug 3a ist weiterhin auf der ersten Ladefläche 202a des ersten Transportfahrzeugs 200a angeordnet. Das dritte Fahrzeug 3c ist auf der zweiten Ladefläche 202b des zweiten Transportfahrzeugs 200b angeordnet und das zweite Fahrzeug 3b befindet sich nun weder in einer der Kontrollzonen 9a, 9b noch in der Freigabezone 13. Die zweite Fahrzeugwarnzone 37b ist in Figur 3b nur teilweise dargestellt und eine von dem dritten Fahrzeugmodul 23c erzeugte Fahrzeugwarnzone ist nicht dargestellt.

Gemäß diesem Ausführungsbeispiel ist in der zweiten Fahrzeug-Verarbeitungseinheit 25b des zweiten Fahrzeugmoduls 23b keinen Statusindikator I gesetzt. Das erste Fahrzeugmodul 23a befindet sich in der zweiten Fahrzeugwarnzone 37b, das von der zweiten Fahrzeug-Verarbeitungseinheit 25b des zweiten Fahrzeugmoduls 23b definiert wird. In analoger Weise befindet sich das zweite Fahrzeugmodul 23b in der ersten Fahrzeugwarnzone 37a des ersten Fahrzeugmoduls 23a. Wie die Pfeile 33 zeigen, die die Fahrtrichtung R der Fahrzeuge 3a, 3b, 3c illustrieren, bewegen sich das erste Fahrzeug 3a und das zweite Fahrzeug 3b aufeinander zu, wobei ein direkter Sichtkontakt zwischen dem ersten Fahrzeug 3a und dem zweiten Fahrzeug 3b durch das erste Tor 108a verhindert wird. Somit besteht die Gefahr einer Kollision zwischen dem ersten und dem zweiten Fahrzeug 3a, 3b, die mittels des Logistiksicherheitssystems 1 verhindert werden kann.

Figur 4 illustriert Verfahrensschritte einer bevorzugten Ausgestaltung des Verfahrens 2, die in der in Figur 3b dargestellten Situation und vorzugsweise parallel zu den übrigen Schritten S1 bis S36 durchgeführt werden. Zunächst tritt das auf dem zweiten Fahrzeug 3b montierte zweite Fahrzeugmodul 23b in die erste Fahrzeugwarnzone 37a ein (Schritt S29). Das erste Fahrzeugmodul 23a ermittelt dies (Schritt S30) und sendet daraufhin die Konfiguration KW1 der ersten Fahrzeugwarnzone 37a (Schritt 31) an das zweite Fahrzeugmodul 23b. Die Konfiguration KW1 der ersten Fahrzeugwarnzone 37a wird an dem zweiten Fahrzeugmodul 23b empfangen (Schritt S32) und das zweite Fahrzeugmodul 23b ermittelt in Antwort darauf, dass es sich innerhalb der ersten Fahrzeugwarnzone 37 befindet (Schritt S33). Das zweite Fahrzeugmodul 23b sendet daraufhin den in der zweiten Fahrzeug-Verarbeitungseinheit 25b gesetzten Statusindikator I an das erste Fahrzeugmodul 23a (Schritt S34). Es soll verstanden werden, dass der Schritt S34 auch das Senden einer Information sein kann, die beinhaltet, dass kein Statusindikator I in der zweiten Fahrzeug-Verarbeitungseinheit 25b gesetzt ist.

Im Gegensatz zu der in Figur 3a illustrierten Situation befindet sich das zweite Fahrzeug 3b nicht auf einer der Ladeflächen 202a, 202b, 202c, 202d, der Transportfahrzeuge 200a, 200b, 200c, 200d. Da sich das zweite Fahrzeug 3b hier zuvor in der Freigabezone 13 befand, ist kein Statusindikator I in der zweiten Fahrzeug-Verarbeitungseinheit 25b gespeichert. In der ersten Fahrzeug-Verarbeitungseinheit 25a ist der Sicherheit-Statusindikator IS gesetzt, da sich das erste Fahrzeug 3a in der Kontrollzone 9a befindet. Der in Schritt S36 durchgeführte Vergleich der Statusindikatoren I ergibt daher, dass sich die in der ersten Fahrzeug-Verarbeitungseinheit 25a und der zweiten Fahrzeug-Verarbeitungseinheit 25b gesetzten Statusindikatoren I unterscheiden.

In Antwort auf das Ermitteln durch die erste Fahrzeug-Verarbeitungseinheit 25a, dass die Statusindikatoren I nicht übereinstimmen, führt die erste Fahrzeug-Verarbeitungseinheit 25a eine Folgeoperation F durch (Schritt S37). In diesem Ausführungsbeispiel stellt die erste Fahrzeug-Verarbeitungseinheit 25a als Folgeoperation 11 ein zweites Beschränkungssignal SB2 bereit. In einem achtunddreißigsten Schritt S38 beschränkt die Steuerung 31a des ersten Fahrzeugs 3a einen Bewegungsfreiheitsgrad des ersten Fahrzeugs 3a, wobei das erste Fahrzeug 3a hier bis zum Stillstand gebremst wird. Das vollständige Abbremsen wird durch die in Figur 3b eingefügte Durchstreichung des die Fahrtrichtung R des ersten Fahrzeugs 3a repräsentierenden Pfeils 33 verdeutlicht.

Vorzugsweise erfolgt das Durchführen der Folgeoperation unter Berücksichtigung des in der Fahrzeug-Verarbeitungseinheit 25a gesetzten Statusindikators I. Beispielweise kann ein zweites Beschränkungssignal SB2 bereitgestellt werden, wenn der Sicherheit-Statusindikator SI gesetzt ist und ein drittes Beschränkungssignal SB3 bereitgestellt wird, wenn der zweite Statusindikator I2 oder kein Statusindikator gesetzt ist. So wird in diesem Ausführungsbeispiel das erste Fahrzeug 3a durch Bereitstellen des zweiten Beschränkungssignals SB2 vollständig gebremst (Schritt S38), während das zweite Fahrzeug 3b durch ein Bereitstellen des dritten Beschränkungssignals SB3 durch die zweite Fahrzeug-Verarbeitungseinheit 25b nur in seiner Höchstgeschwindigkeit beschränkt wird (Schritt S38; verdeutlicht durch Verkürzung des Pfeils 33).

Vorzugsweise kann die Folgeoperation 11 auch das Ausgeben eines Warnsignals mittels der Ausgabeeinheit 51a, 51b des Fahrzeugmoduls 23a, 23b, 23c umfassen. Beispielsweise kann die Fahrzeugmodul 23a, 23b, 23c optische und/oder akustische Ausgabeeinheiten 51a, 51b, wie Signalleuchten, Sirenen und/oder Bildschirme, aufweisen.

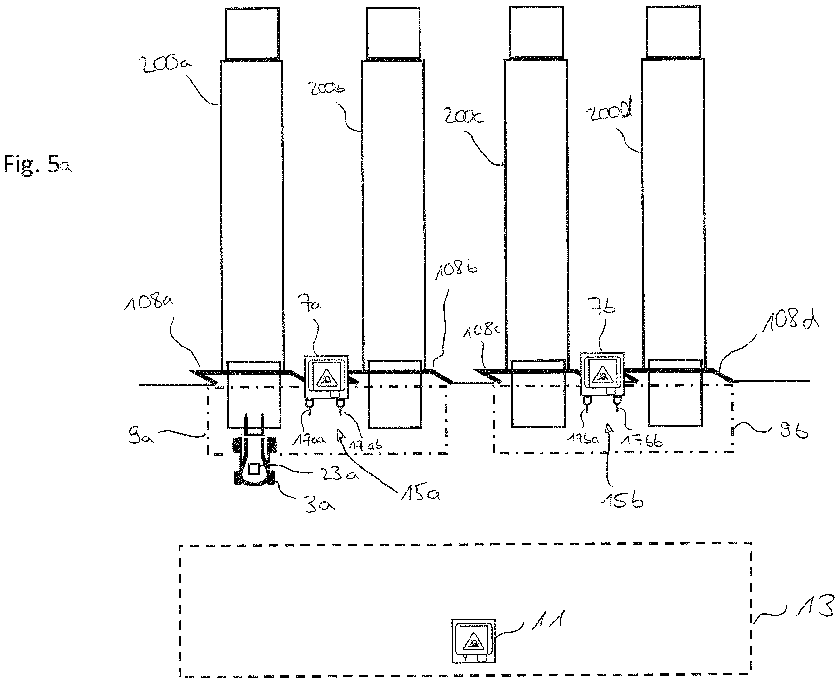

Figur 5a verdeutlicht ein Logistiksicherheitssystem 1 gemäß einem dritten Ausführungsbeispiel, wobei die erste Kontrollzone 9a und die zweite Kontrollzone 9b in einer senkrechten Projektion rechteckig ausgebildet und im Wesentlichen auf den Transportfahrzeugen 200a, 200b, 200c, 200d gegenüberliegenden Seiten der Tore 108a, 108b, 108c, 108d angeordnet sind. Zum Definieren der Kontrollzonen 9a, 9b weisen die Kontroll-Antenneneinheit 15a, 15b jeweils zwei Kontroll-Antennen 17aa, 17ab, 17ba, 17bb auf. Durch das Vorhandensein mehrerer Kontroll-Antennen 17aa, 17ab, 17ba, 17bb kann eine rechteckig geformte Kontrollzone 9a, 9b überwacht werden. Bei der Definition der Kontrollzone 9a, 9b durch die Kontroll-Verarbeitungseinheiten 16a, 16b wird vorzugsweise das Prinzip der Triangulation verwendet.

Die Kontrollmodule 7a, 7b sind vorzugsweise dazu ausgebildet, mit Torsteuerungen 39c, 39d verbunden zu werden. In dem in Figur 5a dargestellten vierten Ausführungsbeispiel ist das zweite Kontrollmodul 7b mit einer dritten Torsteuerung 39c des dritten Tores 108c und einer vierten Torsteuerung 39d eines vierten Tores 108d verbunden. Die Torsteuerungen 39c, 39d stellen dritte und vierte Schließsignale SS3, SS4 bereit. Es soll verstanden werden, dass auch das erste Kontrollmodul 7a mit Torsteuerungen 39c, 39d verbunden sein kann. Vorzugsweise sind die Kontrollmodule 7a, 7b dazu ausgebildet, die Kontrollzonen 9a, 9b unter Verwendung eines Öffnungszustands eines zu überwachenden Übergangs 41a, 41b, 41c, 41d zu definieren.

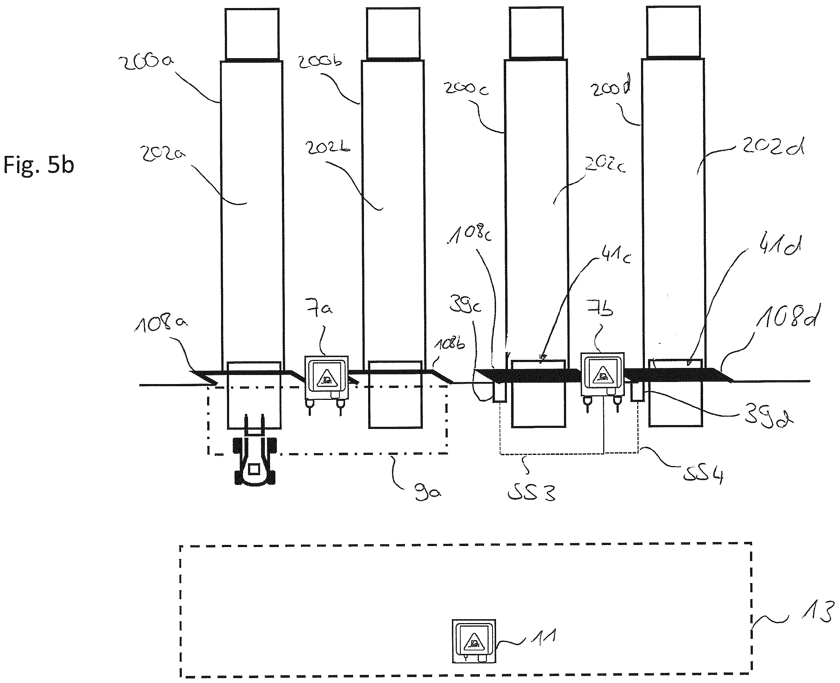

Das dritte Tor 108c und das vierte Tor 108b sind gemäß Figur 5b geschlossen, wobei die erste Torsteuerung 39c und die zweite Torsteuerung 39d Öffnungszustandssignale bereitstellen, die hier den Schließsignalen SS3, SS4 entsprechen. Da das dritte Tor 108c und das vierte Tor 108d geschlossen sind, besteht keine Gefahr, dass Fahrzeuge 3a, 3b, 3b von der Ladezone 102 herabstützen. Daher müssen Übergänge 41c, 41d zu den Ladeflächen 202c, 202d nicht überwacht werden, und die zweite Kontrolleinheit 7b definiert in der Folge keine zweite Kontrollzone 9b. Es soll verstanden werden, dass auch die Kontrollmodule 7a, 7b gemäß den weiteren Ausführungsbeispielen mit Torsteuerungen von jeweils zugeordneten Toren 108a, 108b, 108c, 108d verbunden sein können.

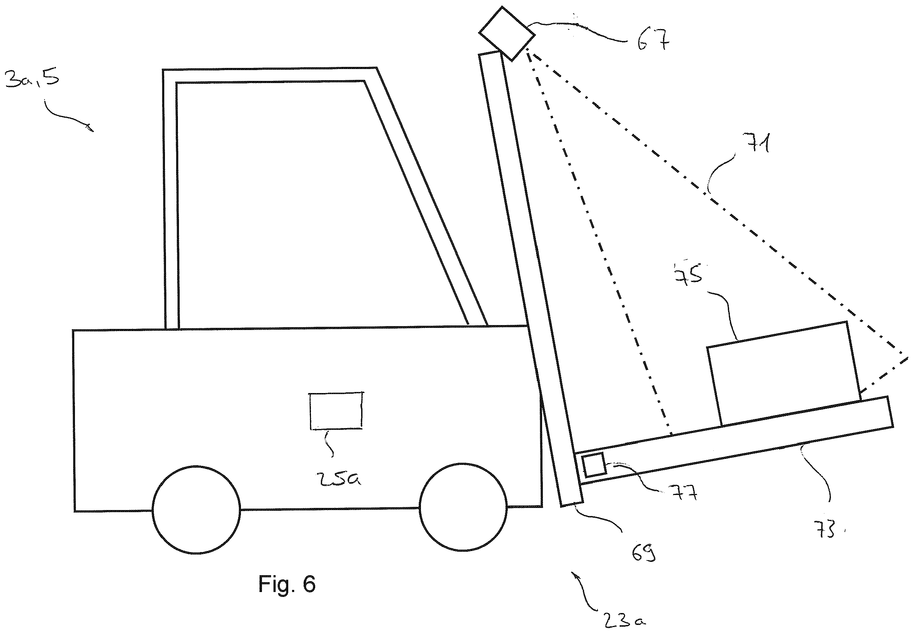

Figur 6 zeigt ein erstes Fahrzeug 3a, das hier ein Gabelstapler 5 ist. Das erste Fahrzeugmodul 23a weist eine Fahrzeug-Erfassungseinrichtung 67 auf, die hier an einem Hubmast 69 des Gabelstaplers 5 angeordnet ist. Ein Erfassungsbereich 71 der Fahrzeug-Erfassungseinrichtung 67 ist auf Ladezinken 73 des Gabelstaplers 5 gerichtet, sodass eine von dem ersten Fahrzeug 3a transportierte Ladung 75 durch die Fahrzeug-Erfassungseinrichtung 67 erfasst werden kann, wenn diese von der ersten Fahrzeug-Verarbeitungseinheit 25a ausgelöst wird.

Ferner weist das erste Fahrzeugmodul 23a noch einen Ladungssensor 77 auf. Die erste Fahrzeug-Verarbeitungseinheit 25a ist mit dem Ladungssensor 77 verbunden und dazu ausgebildet, unter Verwendung des Ladungssensors 77 einen Ladungszustand des ersten Fahrzeugs 3a zu ermitteln. In diesem Ausführungsbeispiel sind die Fahrzeug-Verarbeitungseinheit 25a und der Ladungssensor 77 drahtlos verbunden. Vorzugsweise sind die Fahrzeug-Verarbeitungseinheit 25a und der Ladungssensor 77 mittels Infrarot, Ultraschall, Bluetoot^{®} und/oder Funk verbunden. Signale, Daten und/oder elektrische Energie können dann beispielsweise via Infrarot, Ultraschall, Funk oder Bluetooth zwischen dem Ladungssensor 77 und der ersten Fahrzeug-Verarbeitungseinheit 25a übertragen werden. Vorzugsweise sind auch die Fahrzeug-Erfassungseinrichtung 67 und die erste Fahrzeug-Verarbeitungseinheit 25a drahtlos verbunden.

Die erste Fahrzeug-Verarbeitungseinheit 25a kann unter Verwendung des Ladungssensors 77 ermitteln, ob sich ein Ladungszustand des Fahrzeugs 3a ändert. So kann beispielsweise ein Aufnehmen oder ein Abstellen der Ladung 75 durch die erste Fahrzeug-Verarbeitungseinheit 25a registriert werden. Vorzugsweise ist die erste Fahrzeug-Verarbeitungseinheit 25a dazu ausgebildet, die Fahrzeug-Erfassungseinrichtung 67 in Antwort auf eine Änderung des Ladungszustands auszulösen. Wird beispielsweise die Ladung 75 abgestellt, kann die Fahrzeug-Erfassungseinrichtung 67 ein Bild der Ladung 75 zum Zeitpunkt des Abstellens aufnehmen. Das Bild kann dann vorzugsweise dazu dienen Schäden an der Ladung 75 zu registrieren. Insbesondere bei Gefahrgut kann somit eine Sicherheit erhöht werden. Ferner kann die Fahrzeug-Verarbeitungseinheit 25a auch nur auslösbar sein, wenn ein vorbestimmter Statusindikator I, besonders bevorzugt der Sicherheits-Statusindikator IS gesetzt ist. So ist das Erfassen der Ladung 75 oftmals nur in schwer einsehbaren oder besonders kritischen Bereichen notwendig und ein Verarbeitungsaufwand kann durch diese Beschränkung wirksam reduziert werden. Beispielsweise kann nur wenn das erste Fahrzeug 3a eine gefährliche Ladung 75 auf der Ladefläche 202a abstellt ein Auslösen der Fahrzeug-Erfassungseinrichtung 67 bzw. ein Aufnehmen eines Bildes der Ladung 75 nötig sein.

Figur 7 zeigt schematisch den Aufbau eines Fahrzeugmoduls 23a, 23b, 23c eines Kontrollmoduls 7a, 7b und eines Freigabemoduls 11. Das Fahrzeugmodul 23a, 23b, 23c weist eine Fahrzeug-Antenneneinheit 27a, 27b, 27c auf, die hier mit einer ersten Fahrzeug-Antenne 41aa und einer zweiten Fahrzeug-Antenne 41ab dargestellt ist. Die Fahrzeug-Verarbeitungseinheit 25a, 25b, 25c ist mit der Fahrzeug-Antenneneinheit 27a, 27b, 27c verbunden und weist ferner eine Fahrzeugschnittstelle 43a, 43b auf. Hier ist die Fahrzeugschnittstelle 43a, 43b mit einer ersten Leitung 45a, 45b und einer zweiten Leitung 47a, 47b dargestellt, wobei die erste Leitung 45a, 45b zum Empfangen von Signalen, wie beispielsweise Geschwindigkeitssignalen SV, des Fahrzeugs 3a, 3b, 3c ausgebildet ist. Die zweite Leitung 47a, 47b ist zum Ausgeben von Signalen von dem Fahrzeugmodul 23a, 23b, 23c an das Fahrzeug 3a, 3b, 3c vorgesehen. So können mittels der zweiten Leitung 47a, 47b die Beschränkungssignale SB1, SB2, SB3 und das Freigabesignal SF an der Steuerung 31a, 31b des Fahrzeugs 3a, 3b, 3c bereitgestellt werden. Ferner weist das Fahrzeugmodul 23a, 23b, 23c einen Speicher 49 auf, indem beispielsweise Konfigurationen für die Fahrzeugwarnzone 37a, 37b vorgespeichert sein können. Weiterhin weist das Fahrzeugmodul 23a, 23b, 23c eine Ausgabeeinheit 51a, 51b auf, die beispielsweise optische und/oder akustische Signale ausgeben kann zum Warnen eines Fahrers des Fahrzeugs 3a, 3b, 3c.

In analoger Weise weist das Kontrollmodul 7a, 7b die Kontroll-Antenneneinheit 15a, 15b mit den Kontroll-Antennen 17aa, 17ab, 17ba, 17bb auf. Die Kontroll-Verarbeitungseinheit 16a, 16b ist mit der Kontroll-Antenneneinheit 15a, 15b verbunden und weist eine Kontroll-schnittstelle 53 zum Verbinden mit einer Torsteuerung 39c, 39d auf. Mittels einer ersten Leitung 55 können von der Kontroll-Verarbeitungseinheit 16a, 16b Signale, wie beispielsweise Schließ-Anforderungssignale SSA, an der Torsteuerung 39c, 39d bereitgestellt werden. Vorzugsweise ist die Torsteuersteuerung 39cC, 39d dazu ausgebildet, in Antwort auf das Bereitstellen eines Schließ-Anforderungssignals SSA das Tor 108c, 108d zu schließen. Eine zweite Leitung 57 der Kontroll-Schnittstelle 53 ist zum Empfangen der Schließsignale SS3, SS4 ausgebildet. Ferner weist auch das Kontrollmodul 7a, 7b einen Kontrollspeicher 59 und eine Kontrollausgabeeinheit 61 auf. Die zwischen der Kontrolleinheit 15a, 15b und dem Fahrzeugmodul 23a, 23b, 23c verlaufenden Pfeile repräsentieren das Senden der Konfiguration KK der Kontrollzone 9a, 9b und der Konfiguration KW1, KW2 der Fahrzeugwarenzonen.

Schließlich zeigt Figur 7 das Freigabemodul 11 mit der Freigabe-Antenneneinheit 19, den Freigabe-Antennen 21 und einer Freigabe-Verarbeitungseinheit 20. Analog zum Kontrollmodul 7a, 7b und dem Fahrzeugmodul 23a, 23b, 23c weist auch das Freigabemodul 11 einen Freigabe-Speicher 63 und eine Freigabe-Ausgabeeinheit 65 auf. Die zwischen dem Freigabemodul 11 und dem Fahrzeugmodul 23a, 23b, 23c verlaufenden Pfeile repräsentieren das Senden der Konfiguration KF der Freigabezone 13 von dem Freigabemodul 11 an das Fahrzeugmodul 23a, 23b, 23c sowie ein mögliches Senden der Konfiguration KW1 der Fahrzeugwarnzone 37a, 37b von dem Fahrzeugmodul 23a, 23b, 23c an das Freigabemodul 11.

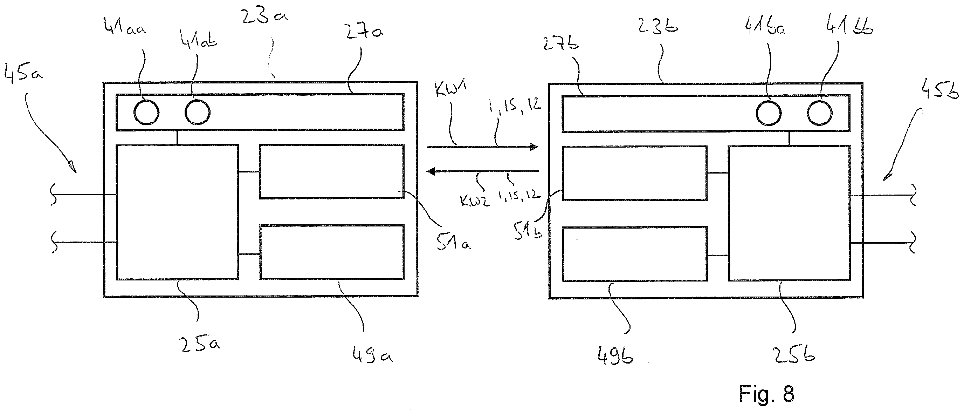

Figur 8 illustriert nun die Kommunikation des ersten Fahrzeugmoduls 23a mit dem zweiten Fahrzeugmodul 23b. Die Fahrzeugmodule 23a, 23b sind hier identisch ausgebildet und weisen je eine Fahrzeug-Antenneneinheit 27a, 27b, zwei Fahrzeug-Antennen 41aa, 41ab, 41ba, 41bb, eine Fahrzeug-Verarbeitungseinheit 25a, 25b, einen Speicher 49a, 49b, eine Schnittstelle 43a, 43b und eine Ausgabeeinheit 51a, 51b auf. Das erste Fahrzeugmodul 23a ist dazu ausgebildet, mittels der ersten Fahrzeug-Antenneneinheit 27a eine Konfiguration KW1 der ersten Fahrzeugwarnzone 37a und/oder den in der ersten Fahrzeug-Verarbeitungseinheit 25a gesetzten Statusindikator I an das zweite Fahrzeugmodul 23b zu senden. In analoger Weise ist das zweite Fahrzeugmodul 23b dazu ausgebildet, eine Konfiguration KW2 der zweiten Fahrzeugwarnzone 37b und/oder einen in der zweiten Fahrzeug-Verarbeitungseinheit 25b gesetzten Statusindikator I zu senden.

## Patentansprüche

1. Verfahren (2) zum Sichern eines Logistikbereichs (100), insbesondere einer Ladezone (102), aufweisend die Schritte:
- Überwachen einer Kontrollzone (9a, 9b), die ein Teilbereich eines ersten dreidimensionalen elektromagnetischen Feldes ist, das von einer Kontroll-Antenneneinheit (15a, 15b) bereitgestellt wird;
- Ermitteln, ob sich ein erstes Fahrzeugmodul (23a) in der Kontrollzone (9a, 9b) befindet, wobei das erste Fahrzeugmodul (23a) auf einem ersten Fahrzeug (3a), insbesondere Flurförderfahrzeug und/oder autonom fahrendes Fahrzeug, montiert und auf die Kontroll-Antenneneinheit (15a, 15b) abgestimmt ist;
- Setzen eines Sicherheits-Statusindikators (IS) in einer ersten Fahrzeug-Verarbeitungseinheit (25a) des ersten Fahrzeugmoduls (23a), in Antwort auf das Ermitteln des ersten Fahrzeugmoduls (23a) in der Kontrollzone (9a, 9b);
- Beibehalten des Sicherheits-Statusindikators (IS) in der ersten Fahrzeug-Verarbeitungseinheit (25a), auch dann, wenn das erste Fahrzeugmodul (23a) die Kontrollzone (9a, 9b) verlässt;
- Überwachen einer Freigabezone (13);
- Ermitteln, ob sich das erste Fahrzeugmodul (23a) in der Freigabezone (13) befindet, **gekennzeichnet durch** den Schritt:
- Löschen des ersten Sicherheits-Statusindikators (IS), wenn ermittelt wird, dass sich das erste Fahrzeugmodul (23a) in der Freigabezone (13) befindet.

2. Verfahren (2) nach Anspruch 1, wobei zusätzlich zum Löschen des ersten Sicherheits-Statusindikators (IS) ausgeführt wird:
- Ersetzen des Sicherheits-Statusindikators (IS) durch einen zweiten Statusindikator (I2) in der ersten Fahrzeug-Verarbeitungseinheit (25a) des ersten Fahrzeugmoduls (23a), wenn ermittelt wird, dass sich das erste Fahrzeugmodul (23a) in der Freigabezone (13) befindet.

3. Verfahren (2) nach Anspruch 1 oder 2, ferner aufweisend:
- Beschränken zumindest eines Bewegungsfreiheitsgrades des ersten Fahrzeugs (3a), wenn der Sicherheits-Statusindikator (IS) in der ersten Fahrzeug-Verarbeitungseinheit (25a) gesetzt ist,
und vorzugsweise
- Freigeben des zumindest einen Bewegungsfreiheitsgrades des ersten Fahrzeugs (3a), wenn der Sicherheits-Statusindikator (IS) aus der ersten Fahrzeug-Verarbeitungseinheit (25a) gelöscht wird, und/oder
- Freigeben des zumindest einen Bewegungsfreiheitsgrades des ersten Fahrzeugs (3a), wenn der zweite Statusindikator (I2) in der ersten Fahrzeug-Verarbeitungseinheit (25a) gesetzt ist.

4. Verfahren (2) nach einem der vorstehenden Ansprüche, ferner aufweisend:
- Definieren einer ersten Fahrzeugwarnzone (37a) für das erste Fahrzeug (3a), die ein Teilbereich eines dritten elektromagnetischen Feldes ist, das von einer ersten Fahrzeug-Antenneneinheit (27a) an dem ersten Fahrzeug (3a) bereitgestellt wird;
- Ermitteln, ob sich ein zweites Fahrzeugmodul (23b), das auf die erste Fahrzeugwarnzone (37a) abgestimmt ist, in der ersten Fahrzeugwarnzone (37a) befindet;
- Erfassen eines in einer zweiten Fahrzeug-Verarbeitungseinheit (25b) des zweiten Fahrzeugmoduls (23b) gesetzten Statusindikators (I);
- Vergleichen des in der ersten Fahrzeug-Verarbeitungseinheit (25a) gesetzten Statusindikators (I) mit dem in der zweiten Fahrzeug-Verarbeitungseinheit (25b) gesetzten Statusindikator (I); und
- Durchführen zumindest einer Folgeoperation (F), wenn der in der zweiten Fahrzeug-Verarbeitungseinheit (25b) gesetzte Statusindikator (I) sich von dem in der ersten Fahrzeug-Verarbeitungseinheit (25a) gesetzten Statusindikator (I) unterscheidet,
wobei die Folgeoperation (F) vorzugsweise zumindest einen der folgenden Schritte aufweist:
- Bereitstellen eines Warnsignals an dem ersten Fahrzeug (3a);
- Bereitstellen eines Warnsignals an dem zweiten Fahrzeug (3b);
- Beschränken zumindest eines Bewegungsfreiheitsgrades des ersten Fahrzeugs (3a); und/oder
- Beschränken zumindest eines Bewegungsfreiheitsgrades des zweiten Fahrzeugs (3b).

5. Verfahren (2) nach Anspruch 4, ferner aufweisend:
- Definieren einer zweiten Fahrzeugwarnzone (37b) für das zweite Fahrzeug (3b), die ein Teilbereich eines vierten dreidimensionalen elektromagnetischen Feldes ist, das von einer zweiten Fahrzeug-Antenneneinheit (27b) bereitgestellt wird;
- Empfangen einer Konfiguration (KW2) der zweiten Fahrzeugwarnzone (37b) des zweiten Fahrzeugs (3b) an dem ersten Fahrzeugmodul (23a); und
- Ermitteln durch das erste Fahrzeugmodul (23a), ob sich das erste Fahrzeugmodul (23a) in der zweiten Fahrzeugwarnzone (37b) befindet,
und/oder vorzugsweise
- Ermitteln, ob sich das erste Fahrzeugmodul (23a) und das zweite Fahrzeugmodul (23b) einander annähern, wobei die zumindest eine Folgeoperation (F) vorzugsweise nur durchgeführt wird, wenn ermittelt wird, dass sich das erste Fahrzeugmodul (23a) und das zweite Fahrzeugmodul (23b) einander annähern.

6. Verfahren (2) nach einem der vorstehenden Ansprüche, wobei die erste Kontrollzone (9a) einen Übergang (41a, 41b, 41c, 41d) zwischen einer Laderampe (106a, 106b, 106c, 106d) und einem zu be- oder entladenden Transportfahrzeug (200a, 200b, 200c, 200d) abdeckt, und vorzugsweise aufweisend:
- Ermitteln, ob sich das auf dem ersten Fahrzeug (3a) montierte erste Fahrzeugmodul (23a) auf einer Ladefläche (202a, 202b, 202c, 202d) des Transportfahrzeugs (200a, 200b, 200c, 200d) befindet.

7. Verfahren (2) nach einem der vorstehenden Ansprüche, ferner aufweisend:
- Ermitteln eines Öffnungszustands eines in der ersten Kontrollzone (9a) angeordneten Tores (108a, 108b, 108c, 108d), wobei der Schritt Überwachen einer ersten Kontrollzone (9a) nur dann erfolgt, wenn Ermittelt wird, dass das Tor (108a, 108b, 108c, 108d) geöffnet ist.

8. Logistiksicherheitssystem (1) zum Sichern eines Logistikbereichs (100), mit:
einem Kontrollmodul (7a, 7b), aufweisend:
eine Kontroll-Antenneneinheit (15a, 15b), mit zumindest einer ersten Kontroll-Antenne (17aa, 17ab, 17ba, 17bb), welche dazu ausgebildet ist, in einer vorbestimmten räumlichen Beziehung zu einer Ladezone (102) des Logistikbereichs (100) montiert zu werden, und ein erstes dreidimensionales elektromagnetisches Feld zu erzeugen,
eine mit der Kontroll-Antenneneinheit (15a, 15b) verbundene Kontroll-Verarbeitungseinheit (16a, 16b), die dazu angepasst ist, wenigstens eine Kontrollzone (9a, 9b) für die Ladezone (102) zu definieren, die ein Teilbereich des ersten dreidimensionalen elektromagnetischen Feldes ist;
ein Freigabemodul (11), aufweisend eine Freigabe-Antenneneinheit (19), mit zumindest einer ersten Freigabe-Antenne (21), welche dazu ausgebildet ist, ein zweites dreidimensionales elektromagnetisches Feld zu erzeugen,
eine mit der Freigabe-Antenneneinheit (19) verbundene Freigabe-Verarbeitungseinheit (20), die dazu angepasst ist, wenigstens eine Freigabezone (13) zu definieren, die ein Teilbereich des zweiten dreidimensionalen elektromagnetischen Feldes ist, und
ein erstes Fahrzeugmodul (23a) für ein erstes Fahrzeug (3a), aufweisend eine erste Fahrzeug-Antenneneinheit (27a), mit zumindest einer ersten Fahrzeug-Antenne (41aa, 41ab), welche dazu ausgebildet ist, in einer vorbestimmten räumlichen Beziehung an dem ersten Fahrzeug (3a) montiert zu werden, und ein drittes dreidimensionales elektromagnetisches Feld zu erzeugen, und
eine mit der ersten Fahrzeug-Antenneneinheit (27a) verbundene erste Fahrzeug-Verarbeitungseinheit (25a), welche dazu angepasst ist, wenigstens eine erste Fahrzeugwarnzone (37a) für das erste Fahrzeug (3a) zu definieren, die ein Teilbereich des dritten elektromagnetischen Feldes ist, wobei die erste Fahrzeug-Verarbeitungseinheit (25a) dazu angepasst ist, mittels der ersten Fahrzeug-Antenneneinheit (27a) zu ermitteln, ob sich das auf die erste Fahrzeug-Antenneneinheit (27a) abgestimmte Kontrollmodul (7a, 7b) und/oder das auf die erste Fahrzeug-Antenneneinheit (27a) abgestimmte Freigabemodul (13) innerhalb der ersten Fahrzeugwarnzone (37a) befindet,
wobei die erste Fahrzeug-Verarbeitungseinheit (25a) dazu ausgebildet ist, in Antwort auf ein Ermitteln des Kontrollmoduls (7a, 7b) in der ersten Fahrzeugwarnzone (37a) einen Sicherheits-Statusindikator (IS) zu setzen,
**dadurch gekennzeichnet, dass** die erste Fahrzeug-Verarbeitungseinheit (25a) dazu ausgebildet ist,
in Antwort auf ein Ermitteln des Freigabemoduls (11) in der ersten Fahrzeugwarnzone (37a) den Sicherheits-Statusindikator (IS) zu löschen.

9. Logistiksicherheitssystem (1) nach Anspruch 8, wobei die erste Fahrzeug-Verarbeitungseinheit (25a) dazu ausgebildet ist, in Antwort auf ein Ermitteln des Freigabemoduls (11) in der ersten Fahrzeugwarnzone (37) den Sicherheits-Statusindikator (IS) durch einen zweiten Statusindikator (I2) zu ersetzen.

10. Logistiksicherheitssystem (1) nach Anspruch 8 oder 9, wobei das erste Fahrzeugmodul (23a) dazu ausgebildet ist, eine Konfiguration der ersten Fahrzeugwarnzone (37) an das Kontrollmodul (7a, 7b) und/oder das Freigabemodul (11) zu senden, wenn sich dieses in Reichweite der ersten Fahrzeug-Antenneneinheit (27a) befindet, und/oder
wobei das Kontrollmodul (7a, 7b) dazu ausgebildet ist, die Konfiguration der Kontrollzone (9a, 9b) an das erste Fahrzeugmodul (23a) zu senden, wenn sich dieses in Reichweite des Kontrollmoduls (7a, 7b) befindet, und/oder
wobei das Freigabemodul (11) dazu ausgebildet ist, die Konfiguration der Freigabezone (13) an das erste Fahrzeugmodul (23a) zu senden, wenn sich dieses in Reichweite des Freigabemoduls (11) befindet,
wobei die erste Fahrzeug-Verarbeitungseinheit (25a) vorzugsweise dazu ausgebildet ist, mit einer Steuereinheit (31a) des ersten Fahrzeugs (3a) verbunden zu werden, und dazu ausgebildet ist, einen Bewegungsfreiheitsgrad des ersten Fahrzeugs (3a) zu beschränken, wenn ein Sicherheits-Statusindikator (IS) gesetzt ist.

11. Logistiksicherheitssystem (1) nach einem der Ansprüche 8 bis 10, ferner aufweisend:
ein zweites Fahrzeugmodul (23b) für ein zweites Fahrzeug (3b), mit einer zweiten Fahrzeug-Antenneneinheit (27b), mit zumindest einer zweiten Fahrzeug-Antenne (41ba, 41bb), welche dazu ausgebildet ist, in einer vorbestimmten räumlichen Beziehung an dem zweiten Fahrzeug (3b) montiert zu werden, und ein viertes dreidimensionales elektromagnetisches Feld zu erzeugen, und
einer mit der zweiten Fahrzeug-Antenneneinheit (27b) verbundenen zweiten Fahrzeug-Verarbeitungseinheit (25b), welche dazu angepasst ist, wenigstens eine zweite Fahrzeugwarnzone (37b) für das zweite Fahrzeug (3b) zu definieren, die ein Teilbereich des vierten elektromagnetischen Feldes ist, wobei die zweite Fahrzeug-Verarbeitungseinheit (25b) dazu angepasst ist, mittels der zweiten Fahrzeug-Antenneneinheit (27b) zu ermitteln, ob sich das auf die zweite Fahrzeug-Antenneneinheit (27b) abgestimmte Kontrollmodul (7a, 7b) und/oder das auf die Fahrzeug-Antenneneinheit (27b) abgestimmte Freigabemodul (11) innerhalb der zweiten Fahrzeugwarnzone (37b) befindet,
wobei die zweite Fahrzeug-Verarbeitungseinheit (25b) dazu ausgebildet ist, in Antwort auf ein Ermitteln des Kontrollmoduls (7a, 7b) in der zweiten Fahrzeugwarnzone (37b) einen Sicherheits-Statusindikator (IS) zu setzen, und
in Antwort auf ein Ermitteln des Freigabemoduls (11) in der zweiten Fahrzeugwarnzone (37b) den Sicherheits-Statusindikator (IS) zu löschen,
wobei die zweite Fahrzeug-Verarbeitungseinheit (25b) vorzugsweise dazu ausgebildet ist, in Antwort auf ein Ermitteln des Freigabemoduls (11) in der zweiten Fahrzeugwarnzone (37b) den Sicherheits-Statusindikator (IS) durch einen zweiten Statusindikator (I2) zu ersetzen.

12. Logistiksicherheitssystem (1) nach Anspruch 11, wobei die erste Fahrzeug-Verarbeitungseinheit (25a) dazu ausgebildet ist, mittels der ersten Fahrzeug-Antenneneinheit (27a) zu ermitteln, ob sich das auf die erste Fahrzeug-Antenneneinheit (27a) abgestimmte zweite Fahrzeugmodul (23b) innerhalb der ersten Fahrzeugwarnzone (37a) befindet.

13. Logistiksicherheitssystem (1) nach Anspruch 12, wobei das zweite Fahrzeugmodul (23b) dazu ausgebildet ist, einen in der zweiten Fahrzeug-Verarbeitungseinheit (25b) gesetzten Statusindikator (I) an das erste Fahrzeugmodul (23a) zu senden, wenn sich dieses in Reichweite der zweiten Fahrzeug-Antenneneinheit (37b) befindet,
wobei das erste Fahrzeugmodul (23a) vorzugsweise dazu ausgebildet ist, basierend auf dem empfangenen Statusindikator (I) des zweiten Fahrzeugmoduls (23b) zu bestimmen, ob der Statusindikator (I) des ersten Fahrzeugmoduls (23a) und der Statusindikator (I) des zweiten Fahrzeugmoduls (23b) voneinander abweichen,, wobei das erste Fahrzeugmodul (23a) besonders bevorzugt dazu ausgebildet ist, ein Warnsignal auszugeben, wenn bestimmt wird, dass der Statusindikator (I) des ersten Fahrzeugmoduls (23a) und der Statusindikator (I) des zweiten Fahrzeugmoduls (23b) voneinander abweichen und/oder zumindest einen Bewegungsfreiheitsgrad des ersten Fahrzeugs (3a) zu beschränken, wenn bestimmt wird, dass der Statusindikator (I) des ersten Fahrzeugmoduls (23a) und der Statusindikator (I) des zweiten Fahrzeugmoduls (23b) voneinander abweichen.

14. Verwendung eines Logistiksicherheitssystems (1) nach einem der vorstehenden Ansprüche 8 bis 13, zum Durchführen der Schritte eines Verfahrens (2) gemäß einem der vorstehenden Ansprüche 1 bis 7.

15. Computerprogramm, umfassend Befehle, die bewirken, dass das Logistiksicherheitssystem (1) nach einem der Ansprüche 8 bis 13 das Verfahren (2) nach einem der Ansprüche 1 bis 7 ausführt, wenn das Computerprogramm auf einer Recheneinheit ausgeführt wird.

## Claims

1. A method (2) for safeguarding a logistic area (100), in particular a loading zone (102), comprising the steps of:
- monitoring a control zone (9a, 9b) which is a subrange of a first three-dimensional electromagnetic field provided by a control antenna unit (15a, 15b);
- determining whether a first vehicle module (23a) is located in the control zone (9a, 9b), wherein the first vehicle module (23a) is mounted on a first vehicle (3a), in particular an industrial truck and/or autonomous driving vehicle, and is matched to the control antenna unit (15a, 15b);
- setting a safety status indicator (IS) in a first vehicle processing unit (25a) of the first vehicle module (23a), in response to determining the first vehicle module (23a) in the control zone (9a, 9b);
- maintaining the safety status indicator (IS) in the first vehicle processing unit (25a) even if the first vehicle module (23a) leaves the control zone (9a, 9b);
- monitoring a release zone (13);
- determining whether the first vehicle module (23a) is located in the release zone (13), **characterized by** the step of:
- deleting the first safety status indicator (IS) when it is determined that the first vehicle module (23a) is in the release zone (13).

2. The method (2) according to claim 1, wherein in addition to deleting the first safety status indicator (IS) the following step is performed:
- replacing the safety status indicator (IS) with a second status indicator (12) in the first vehicle processing unit (25a) of the first vehicle module (23a) when it is determined that the first vehicle module (23a) is in the release zone (13).

3. The method (2) according to claim 1 or 2, further comprising:
- limiting at least one degree of freedom of the first vehicle (3a) if the safety status indicator (IS) is set in the first vehicle processing unit (25a),
and preferably
- releasing the at least one degree of freedom of the first vehicle (3a) if the safety status indicator (IS) is deleted from the first vehicle processing unit (25a), and/or
- releasing the at least one degree of freedom of the first vehicle (3a) if the second status indicator (12) is set in the first vehicle processing unit (25a).

4. The method (2) according to any one of the preceding claims, further comprising:
- defining a first vehicle warning zone (37a) for the first vehicle (3a), which is a subrange of a third electromagnetic field provided by a first vehicle antenna unit (27a) on the first vehicle (3a);
- determining whether a second vehicle module (23b) that is matched to the first vehicle warning zone (37a) is located in the first vehicle warning zone (37a);
- detecting a status indicator (I) set in a second vehicle processing unit (25b) of the second vehicle module (23b);
- comparing the status indicator (I) set in the first vehicle processing unit (25a) with the status indicator (I) set in the second vehicle processing unit (25b); and
- performing at least one follow-up operation (F) if the status indicator (I) set in the second vehicle processing unit (25b) is different from the status indicator (I) set in the first vehicle processing unit (25a),
wherein the follow-up operation (F) preferably comprises at least one of the following steps:
- providing a warning signal at the first vehicle (3a);
- providing a warning signal at the second vehicle (3b);
- limiting at least one degree of freedom of the first vehicle (3a); and/or
- limiting at least one degree of freedom of the second vehicle (3b).

5. The method (2) of claim 4, further comprising:
- defining a second vehicle warning zone (37b) for the second vehicle (3b), which is a subrange of a fourth three-dimensional electromagnetic field provided by a second vehicle antenna unit (27b);
- receiving a configuration (KW2) of the second vehicle warning zone (37b) of the second vehicle (3b) at the first vehicle module (23a); and
- determining by the first vehicle module (23a) whether the first vehicle module (23a) is located in the second vehicle warning zone (37b),
and/or preferably
- determining whether the first vehicle module (23a) and the second vehicle module (23b) are approaching each other, wherein the at least one follow-up operation (F) is preferably only performed when it is determined that the first vehicle module (23a) and the second vehicle module (23b) are approaching each other.

6. The method (2) according to any one of the preceding claims, wherein the first control zone (9a) covers a transition (41a, 41b, 41c, 41d) between a loading ramp (106a, 106b, 106c, 106d) and a transport vehicle (200a, 200b, 200c, 200d) to be loaded or unloaded, and preferably comprising:
- determining whether the first vehicle module (23a) mounted on the first vehicle (3a) is located on a loading area (202a, 202b, 202c, 202d) of the transport vehicle (200a, 200b, 200c, 200d).

7. The method (2) according to any one of the preceding claims, further comprising:
- determining an opening state of a gate (108a, 108b, 108c, 108d) located in the first control zone (9a), wherein the step of monitoring a first control zone (9a) is performed only when it is determined that the gate (108a, 108b, 108c, 108d) is open.

8. A logistic safety system (1) for safeguarding a logistic area (100), comprising:
a control module (7a, 7b) comprising:
a control antenna unit (15a, 15b) having at least one first control antenna (17aa, 17ab, 17ba, 17bb) implemented to be mounted in a predetermined spatial relationship to a loading zone (102) of the logistic area (100) and to generate a first three-dimensional electromagnetic field,
a control processing unit (16a, 16b) connected to the control antenna unit (15a, 15b) and implemented to define at least one control zone (9a, 9b) for the loading zone (102) which is a subrange of the first three-dimensional electromagnetic field;
a release module (11), comprising
a release antenna unit (19) having at least a first release antenna (21) implemented to generate a second three-dimensional electromagnetic field,
a release processing unit (20) connected to the release antenna unit (19) and implemented to define at least one release zone (13) which is a subrange of the second three-dimensional electromagnetic field,
and
a first vehicle module (23a) for a first vehicle (3a), comprising
a first vehicle antenna unit (27a) having at least one first vehicle antenna (41aa, 41ab) implemented to be mounted in a predetermined spatial relationship on the first vehicle (3a) and to generate a third three-dimensional electromagnetic field, and a first vehicle processing unit (25a) connected to the first vehicle antenna unit (27a) and implemented to define at least a first vehicle warning zone (37a) for the first vehicle (3a) which is a subrange of the third electromagnetic field, wherein the first vehicle processing unit (25a) is implemented to determine, by means of the first vehicle antenna unit (27a), whether the control module (7a, 7b) matched to the first vehicle antenna unit (27a) and/or the release module (13) matched to the first vehicle antenna unit (27a) is located within the first vehicle warning zone (37a),
wherein the first vehicle processing unit (25a) is implemented to set a safety status indicator (IS) in response to determining the control module (7a, 7b) in the first vehicle warning zone (37a),
**characterized in that** the first vehicle processing unit (25a) is implemented to delete the safety status indicator (IS) in response to determining the release module (11) in the first vehicle warning zone (37a).

9. The logistic safety system (1) according to claim 8, wherein the first vehicle processing unit (25a) is implemented to replace the safety status indicator (IS) with a second status indicator (12) in response to determining the release module (11) in the first vehicle warning zone (37).

10. The logistic safety system (1) according to claim 8 or 9, wherein the first vehicle module (23a) is implemented to transmit a configuration of the first vehicle warning zone (37) to the control module (7a, 7b) and/or the release module (11) when it is located within range of the first vehicle antenna unit (27a), and/or
wherein the control module (7a, 7b) is implemented to transmit the configuration of the controll zone (9a, 9b) to the first vehicle module (23a) when it is located within range of the control module (7a, 7b), and/or
wherein the release module (11) is implemented to transmit the configuration of the release zone (13) to the first vehicle module (23a) when it is located within range of the release module (11),
wherein the first vehicle processing unit (25a) is preferably implemented to be connected to a control unit (31a) of the first vehicle (3a) and is implemented to limit a degree of freedom of the first vehicle (3a) when a safety status indicator (IS) is set.

11. The logistic safety system (1) according to any one of claims 8 to 10, further comprising:
a second vehicle module (23b) for a second vehicle (3b), comprising a second vehicle antenna unit (27b) having at least one second vehicle antenna (41ba, 41bb) implemented to be mounted in a predetermined spatial relationship on the second vehicle (3b) and to generate fourth three-dimensional electromagnetic field, and
a second vehicle processing unit (25b) connected to the second vehicle antenna unit (27b) and implemented to define at least a second vehicle warning zone (37b) for the second vehicle (3b) which is a subrange of the fourth electromagnetic field, wherein the second vehicle processing unit (25b) is implemented to determine, by means of the second vehicle antenna unit (27b), whether the control module (7a, 7b) matched to the to the second vehicle antenna unit (27b) and/or the release module (11) matched to the vehicle antenna unit (27b) is located within the second vehicle warning zone (37b),
wherein the second vehicle processing unit (25b) is implemented to set a safety status indicator (IS) in response to determining the control module (7a, 7b) in the second vehicle warning zone (37b), and
to delete the safety status indicator (IS) in response to determining the release module (11) in the second vehicle warning zone (37b),
wherein the second vehicle processing unit (25b) is preferably implemented to replace the safety status indicator (IS) with a second status indicator (12) in response to determining the release module (11) in the second vehicle warning zone (37b).

12. The logistic safety system (1) according to claim 11, wherein the first vehicle processing unit (25a) is implemented to determine, by means of the first vehicle antenna unit (27a), whether the second vehicle module (23b) matched to the first vehicle antenna unit (27a) is located within the first vehicle warning zone (37a).

13. The logistic safety system (1) according to claim 12, wherein the second vehicle module (23b) is implemented to transmit a status indicator (I) set in the second vehicle processing unit (25b) to the first vehicle module (23a) when it is located within range of the second vehicle antenna unit (37b),
wherein the first vehicle module (23a) is preferably implemented to determine, based on the received status indicator (I) of the second vehicle module (23b), whether the status indicator (I) of the first vehicle module (23a) and the status indicator (I) of the second vehicle module (23b) differ from one another, wherein the first vehicle module (23a) is particularly preferably implemented to provide a warning signal when it is determined that the status indicator (I) of the first vehicle module (23a) and the status indicator (I) of the second vehicle module (23b) differ from one another and/or to limit at least one degree of freedom of the first vehicle (3a) when it is determined that the status indicator (I) of the first vehicle module (23a) and the status indicator (I) of the second vehicle module (23b) differ from one another.

14. Use of a logistic safety system (1) according to any of the preceding claims 8 to 13, for carrying out the steps of a method (2) according to any of the preceding claims 1 to 7.

15. A computer program comprising commands that cause the logistic safety system (1) according to any of the preceding claims 8 to 13 to perform the method (2) according to any of the preceding claims 1 to 7 when the computer program is executed on a computing unit.

## Revendications

1. Procédé (2) pour sécuriser une zone logistique (100), en particulier une zone de chargement (102), comprenant les étapes suivantes:
- surveiller une zone de contrôle (9a, 9b) qui est une zone partielle d'un premier champ électromagnétique tridimensionnel qui est fourni par une unité d'antenne de contrôle (15a, 15b);
- déterminer si un premier module de véhicule (23a) se trouve dans la zone de contrôle (9a, 9b), sachant que le premier module de véhicule (23a) est monté sur un premier véhicule (3a), en particulier un véhicule de manutention et/ou un véhicule autonome, et est accordé sur l'unité d'antenne de contrôle (15a, 15b);
- définir un indicateur d'état de sécurité (IS) dans une première unité de traitement de véhicule (25a) du premier module de véhicule (23a) en réponse à la détermination du premier module de véhicule (23a) dans la zone de contrôle (9a, 9b);
- maintenir l'indicateur d'état de sécurité (IS) dans la première unité de traitement de véhicule (25a), même si le premier module de véhicule (23a) quitte la zone de contrôle (9a, 9b);
- surveiller une zone d'autorisation (13);
- déterminer si le premier module de véhicule (23a) se trouve dans la zone d'autorisation (13), **caractérisé par** l'étape suivante:
- effacer le premier indicateur d'état de sécurité (IS) s'il est déterminé que le premier module de véhicule (23a) se trouve dans la zone d'autorisation (13).

2. Procédé (2) selon la revendication 1, dans lequel est effectuée l'étape suivante en plus de l'effacement du premier indicateur d'état de sécurité (IS):
- remplacer l'indicateur d'état de sécurité (IS) par un deuxième indicateur d'état (I2) dans la première unité de traitement de véhicule (25a) du premier module de véhicule (23a) s'il est déterminé que le premier module de véhicule (23a) se trouve dans la zone d'autorisation (13).

3. Procédé (2) selon la revendication 1 ou 2, comprenant en outre:
- limiter au moins un degré de liberté de mouvement du premier véhicule (3a) si l'indicateur d'état de sécurité (IS) est défini dans la première unité de traitement de véhicule (25a),
et de préférence
- libérer le, au moins un, degré de liberté de mouvement du premier véhicule (3a) si l'indicateur d'état de sécurité (IS) est effacé de la première unité de traitement de véhicule (25a), et/ou
- libérer le, au moins un, degré de liberté de mouvement du premier véhicule (3a) si le deuxième indicateur d'état (I2) est défini dans la première unité de traitement de véhicule (25a).

4. Procédé (2) selon l'une quelconque des revendications précédentes, comprenant en outre les étapes suivantes:
- définir une première zone d'avertissement véhicule (37a) pour le premier véhicule (3a), qui est une zone partielle d'un troisième champ électromagnétique qui est fourni par une première unité d'antenne de véhicule (27a) sur le premier véhicule (3a);
- déterminer si un deuxième module de véhicule (23b), qui est accordé sur la première zone d'avertissement véhicule (37a), se trouve dans la première zone d'avertissement véhicule (37a);
- détecter un indicateur d'état (I) défini dans une deuxième unité de traitement de véhicule (25b) du deuxième module de véhicule (23b);
- comparer l'indicateur d'état (I) défini dans la première unité de traitement de véhicule (25a) à l'indicateur d'état (I) défini dans la deuxième unité de traitement de véhicule (25b); et
- exécuter au moins une opération consécutive (F) si l'indicateur d'état (I) défini dans la deuxième unité de traitement de véhicule (25b) diffère de l'indicateur d'état (I) défini dans la première unité de traitement de véhicule (25a),
dans lequel l'opération consécutive (F) comprend de préférence au moins l'une des étapes suivantes:
- fournir un signal d'avertissement au niveau du premier véhicule (3a);
- fournir un signal d'avertissement au niveau du deuxième véhicule (3b);
- limiter au moins un degré de liberté de mouvement du premier véhicule (3a); et/ou
- limiter au moins un degré de liberté de mouvement du deuxième véhicule (3b).

5. Procédé (2) selon la revendication 4, comprenant en outre:
- définir une deuxième zone d'avertissement véhicule (37b) pour le deuxième véhicule (3b), qui est une zone partielle d'un quatrième champ électromagnétique tridimensionnel qui est fourni par une deuxième unité d'antenne de véhicule (27a);
- recevoir une configuration (KW2) de la deuxième zone d'avertissement véhicule (37b) du deuxième véhicule (3b) au premier module de véhicule (23a); et
- déterminer, par le premier module de véhicule (23a), si le premier module de véhicule (23a) se trouve dans la deuxième zone d'avertissement véhicule (37b),
et/ou de préférence,
- déterminer si le premier module de véhicule (23a) et le deuxième module de véhicule (23b) se rapprochent l'un de l'autre, sachant que l'au moins une opération consécutive (F) est de préférence exécutée uniquement s'il est déterminé que le premier module de véhicule (23a) et le deuxième module de véhicule (23b) se rapprochent l'un de l'autre.

6. Procédé (2) selon l'une quelconque des revendications précédentes, dans lequel la première zone de contrôle (9a) couvre une transition (41a, 41b, 41c, 41d) entre une rampe de chargement (106a, 106b, 106c, 106d) et un véhicule de transport (200a, 200b, 200c, 200d) à charger ou à décharger, et comprenant de préférence:
- déterminer si le premier module de véhicule (23a) monté sur le premier véhicule (3a) se trouve sur une surface de chargement (202a, 202b, 202c, 202d) du véhicule de transport (200a, 200b, 200c, 200d).

7. Procédé (2) selon l'une quelconque des revendications précédentes, comprenant en outre les étapes suivantes:
- déterminer un état d'ouverture d'une porte (108a, 108b, 108c, 108d) disposée dans la première zone de contrôle (9a), sachant que l'étape de surveillance d'une première zone de contrôle (9a) est effectuée uniquement s'il est déterminé que la porte (108a, 108b, 108c, 108d) est ouverte.

8. Système de sécurité logistique (1) pour sécuriser une zone logistique (100), comprenant:
un module de contrôle (7a, 7b), comprenant:
une unité d'antenne de contrôle (15a, 15b), comprenant au moins une première antenne de contrôle (17aa, 17ab, 17ba, 17bb) qui est configurée pour être montée dans une relation spatiale prédéterminée avec une zone de chargement (102) de la zone logistique (100) et pour générer un premier champ électromagnétique tridimensionnel,
une unité de traitement de contrôle (16a, 16b) reliée à l'unité d'antenne de contrôle (15a, 15b), qui est adaptée pour définir au moins une zone de contrôle (9a, 9b) pour la zone de chargement (102), qui est une zone partielle du premier champ électromagnétique tridimensionnel;
un module d'autorisation (11), comprenant
une unité d'antenne d'autorisation (19), comprenant au moins une première antenne d'autorisation (21) qui est configurée pour générer un deuxième champ électromagnétique tridimensionnel,
une unité de traitement d'autorisation (20) reliée à l'unité d'antenne d'autorisation (19) et adaptée pour définir au moins une zone d'autorisation (13) qui est une zone partielle du deuxième champ électromagnétique tridimensionnel, et
un premier module de véhicule (23a) pour un premier véhicule (3a), comprenant une première unité d'antenne de véhicule (27a), comprenant au moins une première antenne de véhicule (41aa, 41ab) qui est configurée pour être montée dans une relation spatiale prédéterminée sur le premier véhicule (3a) et pour générer un troisième champ électromagnétique tridimensionnel, et
une première unité de traitement de véhicule (25a) reliée à la première unité d'antenne de véhicule (27a), qui est adaptée pour définir au moins une première zone d'avertissement véhicule (37a) pour le premier véhicule (3a), qui est une zone partielle du troisième champ électromagnétique, sachant que la première unité de traitement de véhicule (25a) est adaptée pour déterminer, au moyen de la première unité d'antenne de véhicule (27a), si le module de contrôle (7a, 7b) accordé sur la première unité d'antenne de véhicule (27a) et/ou le module l'autorisation (13) accordé sur la première unité d'antenne de véhicule (27a) se trouve(nt) à l'intérieur de la première zone d'avertissement véhicule (37a),
dans lequel la première unité de traitement de véhicule (25a) est configurée pour définir un indicateur d'état de sécurité (IS) en réponse à une détermination du module de contrôle (7a, 7b) dans la première zone d'avertissement véhicule (37a), **caractérisé en ce que** la première unité de traitement de véhicule (25a) est configurée pour supprimer l'indicateur d'état de sécurité (IS) en réponse à une détermination du module d'autorisation (11) dans la première zone d'avertissement véhicule (37a).

9. Système de sécurité logistique (1) selon la revendication 8, dans lequel la première unité de traitement de véhicule (25a) est configurée pour remplacer l'indicateur d'état de sécurité (IS) par un deuxième indicateur d'état (I2) en réponse à une détermination du module d'autorisation (11) dans la première zone d'avertissement véhicule (37a).

10. Système de sécurité logistique (1) selon la revendication 8 ou 9, dans lequel le premier module de véhicule (23a) est configuré pour envoyer une configuration de la première zone d'avertissement véhicule (37) au module de contrôle (7a, 7b) et/ou au module d'autorisation (11) si celui-ci se trouve à portée de la première unité d'antenne de véhicule (27a), et/ou
dans lequel le module de contrôle (7a, 7b) est configuré pour envoyer la configuration de la zone de contrôle (9a, 9b) au premier module de véhicule (23a) si celui-ci se trouve à portée du module de contrôle (7a, 7b), et/ou
dans lequel le module d'autorisation (11) est configuré pour envoyer la configuration de la zone d'autorisation (13) au premier module de véhicule (23a) si celui-ci se trouve à portée du module d'autorisation (11),
dans lequel la première unité de traitement de véhicule (25a) est de préférence configurée pour être reliée à une unité de commande (31a) du premier véhicule (3a) et est configurée pour limiter un degré de liberté de mouvement du premier véhicule (3a) si un indicateur d'état de sécurité (IS) est défini.

11. Système de sécurité logistique (1) selon l'une quelconque des revendications 8 à 10, comprenant en outre:
un deuxième module de véhicule (23b) pour un deuxième véhicule (3b), comprenant une deuxième unité d'antenne de véhicule (27b), comprenant au moins une deuxième antenne de véhicule (41ba, 41bb) qui est configurée pour être montée dans une relation spatiale prédéterminée sur le deuxième véhicule (3b) et pour générer un quatrième champ électromagnétique tridimensionnel, et
une deuxième unité de traitement de véhicule (25b) reliée à la deuxième unité d'antenne de véhicule (27b), qui est adaptée pour définir au moins une deuxième zone d'avertissement véhicule (37b) pour le deuxième véhicule (3b), qui est une zone partielle du quatrième champ électromagnétique, sachant que la deuxième unité de traitement de véhicule (25b) est adaptée pour déterminer, au moyen de la deuxième unité d'antenne de véhicule (27b), si le module de contrôle (7a, 7b) accordé sur la deuxième unité d'antenne de véhicule (27b) et/ou le module l'autorisation (11) accordé sur l'unité d'antenne de véhicule (27b) se trouve(nt) à l'intérieur de la deuxième zone d'avertissement véhicule (37b),
dans lequel la deuxième unité de traitement de véhicule (25b) est configurée pour définir un indicateur d'état de sécurité (IS) en réponse à une détermination du module de contrôle (7a, 7b) dans la deuxième zone d'avertissement véhicule (37b), et,
supprimer l'indicateur d'état de sécurité (IS) en réponse à une détermination du module d'autorisation (11) dans la deuxième zone d'avertissement véhicule (37b), dans lequel la deuxième unité de traitement de véhicule (25b) est de préférence configurée pour remplacer l'indicateur d'état de sécurité (IS) par un deuxième indicateur d'état (I2) en réponse à une détermination du module d'autorisation (11) dans la deuxième zone d'avertissement véhicule (37b).

12. Système de sécurité logistique (1) selon la revendication 11, dans lequel la première unité de traitement de véhicule (25a) est configurée pour déterminer, au moyen de la première unité d'antenne de véhicule (27a), si le deuxième module de véhicule (23b) accordé sur la première unité d'antenne de véhicule (27a) se trouve à l'intérieur de la première zone d'avertissement véhicule (37a).

13. Système de sécurité logistique (1) selon la revendication 12, dans lequel le deuxième module de véhicule (23b) est configuré pour envoyer un indicateur d'état (I) défini dans la deuxième unité de traitement de véhicule (25b) au premier module de véhicule (23a) si celui-ci se trouve à portée de la deuxième unité d'antenne de véhicule (37b),
dans lequel le premier module de véhicule (23a) est de préférence configuré pour déterminer, sur la base de l'indicateur d'état (I) reçu du deuxième module de véhicule (23b), si l'indicateur d'état (I) du premier module de véhicule (23a) et l'indicateur d'état (I) du deuxième module de véhicule (23b) diffèrent l'un de l'autre, sachant que le premier module de véhicule (23a) est de manière particulièrement préférée configuré pour émettre un signal d'avertissement s'il est déterminé que l'indicateur d'état (I) du premier module de véhicule (23a) et l'indicateur d'état (I) du deuxième module de véhicule (23b) diffèrent l'un de l'autre et/ou pour limiter au moins un degré de liberté de mouvement du premier véhicule (3a) s'il est déterminé que l'indicateur d'état (I) du premier module de véhicule (23a) et l'indicateur d'état (I) du deuxième module de véhicule (23b) diffèrent l'un de l'autre.

14. Utilisation d'un système de sécurité logistique (1) selon l'une quelconque des revendications 8 à 13 précédentes pour la mise en œuvre des étapes d'un procédé (2) selon l'une quelconque des revendications 1 à 7 précédentes.

15. Programme informatique comprenant des instructions qui font à ce que le système de sécurité logistique (1) selon l'une quelconque des revendications 8 à 13 exécute le procédé (2) selon l'une quelconque des revendications 1 à 7 lorsque le programme informatique est exécuté sur une unité de calcul.
